# EUROPEAN PATENT SPECIFICATION

(11) **EP 4 460 096 B1**
(45) Date of publication and mention of the grant of the patent: **06.05.2026**
(21) Application number: 23762911.8
(22) Date of filing: 01.03.2023
(51) Int. Cl.: H04L 67/51, H04W 48/10, H04W 4/80, H04L 69/18, H04L 67/12

(54) **COMMUNICATION METHODS**
KOMMUNIKATIONSVERFAHREN, ELEKTRONISCHE VORRICHTUNG UND VORRICHTUNG
PROCÉDÉ DE COMMUNICATION, DISPOSITIF ÉLECTRONIQUE ET APPAREIL

(30) Priority: 02.03.2022 CN 202210199090
(43) Date of publication of application: 06.11.2024
(73) Proprietor: Huawei Technologies Co., Ltd., Shenzhen, Guangdong 518129 (CN)
(72) Inventor: ZHANG, Qihu, Shenzhen, Guangdong 518129 (CN); HU, Shiyao, Shenzhen, Guangdong 518129 (CN); LIU, Feng, Shenzhen, Guangdong 518129 (CN); ZHANG, Yingying, Shenzhen, Guangdong 518129 (CN)
(74) Representative: Pfenning, Meinig & Partner mbB
(86) International application number: PCT/CN2023/078987
(87) International publication number: WO 2023/165513

(56) References cited:
- CN-A- 110 121 902
- CN-A- 112 147 904
- CN-A- 112 152 884
- US-A1- 2019 200 198
- US-A1- 2021 127 244

## Description

### TECHNICAL FIELD

This application relates to the communication field, and in particular, to a communication method, an electronic device, and an apparatus.

### BACKGROUND

With continuous development of the smart home industry, more internet of things devices appear in people's homes, and these internet of things devices may support different communication protocols.

When a user wants to control an internet of things device by using a personal device of the user, the personal device of the user needs to support a communication protocol used by the internet of things device. If the personal device of the user does not support the communication protocol used by the internet of things device, or cannot communicate with the internet of things device temporarily by using the communication protocol used by the internet of things device, the personal device of the user cannot discover the internet of things device, and cannot establish a connection to the internet of things device.

However, in an actual application scenario, the personal device of the user can support a limited quantity of communication protocols. As a result, the personal device of the user may not be able to support a communication protocol used by some internet of things devices, and cannot discover these internet of things devices, affecting user experience.

US 2021/127244 A1 discloses that an electronic device comprises a first communication circuit configured to support a first communication protocol; a display; and at least one processor operatively connected to the first communication circuit and the display, wherein the at least one processor is configured to: configure a cluster with at least one external electronic based on the first communication protocol device through the first communication circuit, receive through the first communication circuit, from the at least one external electronic device, information identifying at least one short-range communication device connected to the at least one external electronic device via a second communication protocol, and control the display to display at least one indicator of the at least one short-range communication device based on the information received from the at least one external electronic device.

### SUMMARY

The present invention is set out in the appended set of claims. Embodiments of this application provide a communication method, an electronic device, and an apparatus, to resolve a problem that a device discovery capability of an electronic device used by a user is insufficient because the electronic device can support a limited quantity of communication protocols or the electronic device cannot use some communication protocols temporarily.

According to a first aspect, an embodiment of this application provides a communication method, applied to a first device. The first device supports a first protocol. The method includes:
performing a device discovery operation based on the first protocol, to discover a first candidate device that supports the first protocol;
determining the first candidate device as an auxiliary device in response to determining that the first candidate device further supports a second protocol, where the second protocol is different from the first protocol; or
broadcasting a query packet based on the first protocol; receiving a protocol information packet, where the protocol information packet is a packet fed back by a second device in response to the query packet, and the protocol information packet indicates a communication protocol supported by the second device, or indicates a communication protocol currently available for the second device; and determining the second device as an auxiliary device based on the protocol information packet indicating that the second device supports or is currently capable of using the second protocol;
after determining the auxiliary device, sending a scan packet to the auxiliary device, where the scan packet indicates the auxiliary device to perform a device discovery operation;
receiving a device information packet sent by the auxiliary device, where the device information packet includes device information of a second candidate device discovered by the auxiliary device by performing the device discovery operation based on the second protocol; and
displaying device information of the first candidate device and the device information of the second candidate device.

It should be noted that, in embodiments of this application, the first device may be understood as an electronic device that is being used by a user. For example, the first device may be any one or more of electronic devices such as a mobile phone, a tablet computer, a smart large screen, and a smartwatch that are being used by the user.

The first device supports a communication protocol in a first protocol set. The first protocol set may include one or more communication protocols. The communication protocol may include a wired communication protocol and/or a wireless communication protocol. For example, the first protocol set may include any one or more of communication protocols such as a Wi-Fi protocol, a Bluetooth protocol, a ZigBee (ZigBee) protocol, a power line communication (power line communication, PLC) protocol, an ethernet communication protocol, a universal serial bus (universal serial bus, USB) protocol, and an ultra-wideband (ultra-wideband, UWB) protocol.

In an embodiment of this application, the communication protocol in the first protocol set may be defined as the first protocol.

In addition, in some embodiments, the communication protocol in the first protocol set may alternatively be understood as a communication protocol that may be currently used by the first device. Some communication protocols that can be supported but cannot be currently used temporarily by the first device may not be included in the first protocol set.

When the first device performs the device discovery operation, the first device may listen to a surrounding first protocol-based first packet based on the communication protocol in the first protocol set. Then, the first device may parse the first packet obtained through listening, and extract, from the first packet, device information of an electronic device that sends the first packet, to discover the electronic device that sends the first packet.

Content of the device information may be set based on an actual requirement. For example, the device information may include one or more of information such as a media access control (Media Access Control, MAC) address, an internet protocol address (Internet Protocol Address, IP address), a device type, a communication protocol type, and a device name.

In an embodiment of this application, an electronic device directly discovered by the first device based on the first protocol supported by the first device and that also supports the first protocol may be defined as the first candidate device. As described above, the first candidate device can send the first packet based on the first protocol, and the first packet can be obtained by the first device through listening. In this way, the first candidate device can be directly discovered by the first device.

In addition, to discover a surrounding electronic device that does not support the first protocol, the first device may further determine the auxiliary device from surrounding electronic devices that support the first protocol.

Specifically, in some embodiments, after the first device discovers the first candidate device, the first device may obtain information about a communication protocol supported by or currently available for the first candidate device.

Then, the first device may determine, as the auxiliary device, the first candidate device that supports or is currently capable of using the second protocol. The second protocol is different from the first protocol, or it may be understood that the second protocol is not in the first protocol set.

A manner in which the first device obtains the information about the communication protocol supported by or currently available for the first candidate device may be set based on an actual requirement.

For example, in an example, the first device may query, based on the device type of the first candidate device, the communication protocol supported by or currently available for the first candidate device. In another example, the first candidate device may include, in the broadcast first packet, the information about the communication protocol supported by or currently available for the first candidate device. After the first device obtains the first packet through listening, the first device may parse the first packet to obtain the information about the communication protocol supported by or currently available for the first candidate device.

In some other embodiments, the first device may alternatively broadcast the query packet, to request a surrounding second device to return, to the first device, information about the communication protocol supported by or currently available for the second device.

When the second device receives the query packet, the second device may query the communication protocol supported by the second device, and send the protocol information packet to the first device. The protocol information packet carries information about the communication protocol supported by or currently available for the second device.

After the first device receives the protocol information packet, the first device may determine the second device as the auxiliary device if the protocol information packet indicates that the second device supports the second protocol.

In some other embodiments, the first device may alternatively determine the auxiliary device in another manner. A manner in which the first device determines the auxiliary device is not limited in embodiments of this application.

After determining the auxiliary device, the first device can send the scan packet to the auxiliary device. The scan packet indicates the auxiliary device to perform the device discovery operation.

After the auxiliary device receives the scan packet, the auxiliary device can perform the device discovery operation based on the second protocol, to discover the second candidate device that supports the second protocol.

Subsequently, the auxiliary device can send the device information packet to the first device. The device information packet carries the device information of the second candidate device.

When the first device receives the device information packet, the first device may obtain the device information of the second candidate device from the device information packet, and display, to the user, the device information of the first candidate device and the device information of the second candidate device. In this way, the user learns of an electronic device that exists around.

According to the foregoing communication method, the first device can discover, by using a discovery capability of the auxiliary device, the second candidate device that supports the second protocol. This resolves, to some extent, a problem that a device discovery capability of the first device is insufficient because the first device supports a limited quantity of communication protocols or the first device cannot use the second protocol temporarily. Therefore, the first device can discover as many surrounding electronic devices as possible, to effectively improve user experience. This achieves high ease-of-use and practicability.

In a possible implementation of the first aspect, the determining the second device as an auxiliary device based on the protocol information packet indicating that the second device supports or is currently capable of using the second protocol specifically includes:
obtaining working status information corresponding to the second device; and
determining the second device as the auxiliary device based on the protocol information packet indicating that the second device supports or is currently capable of using the second protocol and the working status information corresponding to the second device.

It should be noted that, in addition to determining the auxiliary device based on the communication protocol supported by or currently available for the second device, the first device may further consider another factor. For example, the first device may further obtain the working status information of the second device, and determine, based on the working status information of the second device, whether the second device may become the auxiliary device.

A manner in which the first device obtains the working status information of the second device may be set based on an actual requirement.

For example, in an example, the first device may actively send a status query packet to the second device, receive a status information packet fed back by the second device, and parse the status information packet to obtain the working status information of the second device. In another example, when feeding back the protocol information packet, the second device may alternatively include the working status information of the second device in the protocol information packet. The first device may parse the protocol information packet to obtain the working status information of the second device. In some other examples, the first device may alternatively obtain the working status information of the second device in another manner. A manner in which the first device obtains the working status information of the second device is not limited in embodiments of this application.

The working status information may include one or more of information such as a power connection status, a remaining battery level percentage, central processing unit (Central Processing Unit, CPU) usage, memory usage, and communication capability information.

For example, the working status information may be used to reflect whether the second device is an always-on device (namely, a device that is always connected to external power for power supply), whether usage of a processor computing resource of the second device exceeds a preset threshold, and a busy degree of an air interface communication resource of the second device.

Then, the first device may determine, as the auxiliary device, a second device that supports or is currently capable of using the second protocol and whose working status information meets a preset status condition.

The preset status condition may be set based on an actual requirement. For example, the preset status condition may include one or more of conditions such as that the second device is an always-on device, the CPU usage is less than a preset threshold, and there is an idle air interface communication resource.

According to the foregoing method, the first device can select, as the auxiliary device, a second device in a good working status from the second device that supports the second protocol. This reduces impact on the auxiliary device, and ensures user experience.

In a possible implementation of the first aspect, the first device receives one or more protocol information packets.

The determining the second device as an auxiliary device based on the protocol information packet indicating that the second device supports or is currently capable of using the second protocol specifically includes:
determining the auxiliary device from one or more second devices based on the one or more protocol information packets, where the auxiliary device supports or is currently capable of using the second protocol.

It should be noted that, after broadcasting the query packet, the first device may receive the one or more protocol information packets fed back by the one or more second devices.

In this case, the first device may determine, based on the one or more protocol information packets, that each of the one or more second devices supports or is currently capable of using a communication protocol, and accordingly determine, one or more auxiliary devices that support or are currently capable of using the second protocol.

In a possible implementation of the first aspect, the determining the auxiliary device from one or more second devices based on the one or more protocol information packets specifically includes:
determining, based on the one or more protocol information packets, one or more second protocol sets corresponding to the one or more second devices, where the second protocol set is a set of communication protocols supported by or currently available for the second device; and
determining, as the auxiliary device, a second device corresponding to a second protocol set that includes the second protocol and that is not a proper subset of another second protocol set.

It should be noted that, after obtaining the one or more protocol information packets, the first device may determine, based on the one or more protocol information packets, a second protocol set corresponding to each second device.

The second protocol set is the set of the communication protocol supported by or currently available for the second device.

Then, the first device may select, as the auxiliary device, a second device with better performance from the one or more second devices based on the second protocol set corresponding to each second device.

Specifically, the first device may detect whether each second protocol set includes the second protocol and whether each second protocol set is the proper subset of the another second protocol set.

Then, the first device may determine, as the auxiliary device, the second device corresponding to the second protocol set that includes the second protocol and that is not the proper subset of the another second protocol set.

According to the foregoing method, the first device can select, as the auxiliary device, the second device with the better performance based on the second protocol set corresponding to each second device. This reduces a quantity of auxiliary devices, reduces a device resource occupied in an auxiliary discovery process, and reduces impact on a communication system.

In a possible implementation of the first aspect, the first device receives one or more protocol information packets. The protocol information packet is a packet fed back by the second device that supports or is currently capable of using the second protocol.

The determining the second device as an auxiliary device based on the protocol information packet indicating that the second device supports or is currently capable of using the second protocol includes:
determining, as auxiliary devices, all second devices that feed back the protocol information packets.

It should be noted that, in some embodiments, when receiving the query packet, the second device may detect whether the communication protocol supported by or currently available for the second device includes the second protocol.

The second device may not respond to the query packet if the communication protocol supported by or currently available for the second device does not include the second protocol.

The second device may send the protocol information packet to the first device if the communication protocol supported by or currently available for the second device includes the second protocol.

In this case, because all the second devices that feed back the protocol information packets support or are currently capable of using the second protocol, in some embodiments, the first device may determine, as the auxiliary devices, all the second devices that feed back protocol information packets.

In a possible implementation of the first aspect, the method further includes:
detecting a device selection operation of the user;
determining a target device in response to the device selection operation, where the target device is the first candidate device or the second candidate device; and
when the target device is the second candidate device, sending a first connection request to the auxiliary device that discovers the target device, where the first connection request is used to trigger the first device to establish a connection to the auxiliary device based on the first protocol, and is used to trigger the auxiliary device to establish a connection to the target device based on the second protocol.

It should be noted that, after the user views the device information of the first candidate device and the device information of the second candidate device that are displayed by the first device, if there is no electronic device that the user wants to use in the first candidate device and the second candidate device, the user may end a current communication procedure.

If there is an electronic device that the user wants to use in the first candidate device and the second candidate device, the user may perform the device selection operation on the first device, to select, from the first candidate device and the second candidate device, the target device to which the user wants to connect.

A form of the device selection operation may be set based on an actual requirement. For example, the device selection operation may include one or more of operations such as a tapping operation, a touching and holding operation, a sliding operation, and a knocking operation that are performed on a display of the first device.

After detecting the device selection operation, the first device may determine the target device based on the device selection operation. The target device may be the first candidate device or the second candidate device.

When the target device is the second candidate device, the first device may send the first connection request to the auxiliary device that discovers the target device.

After receiving the first connection request, the auxiliary device may establish the connection to the first device based on the first protocol, and establish the connection to the target device based on the second protocol.

After the first device establishes the connection to the auxiliary device, and the auxiliary device establishes the connection to the target device, the first device and the target device may indirectly perform data exchange based on the auxiliary device.

According to the foregoing method, the first device can communicate, by using the auxiliary device, with the target device that supports the second protocol, and control the target device that supports the second protocol. In this way, the first device can control more types of electronic devices. Therefore, the communication method provided in embodiments of this application effectively improves user experience, and has high ease-of-use and practicability.

In a possible implementation of the first aspect, after the sending a first connection request to the auxiliary device that discovers the target device, the method further includes:
sending a data packet to the auxiliary device, where the data packet includes data to be sent to the target device by the first device.

It should be noted that, when the first device is to transmit the data to the target device, the first device may send the data packet to the auxiliary device. The data packet carries the data to be sent to the target device by the first device.

After the auxiliary device receives the data packet, the auxiliary device may forward, to the target device, the data carried in the data packet.

Correspondingly, when the target device is to transmit data to the first device, the target device may send a data packet to the auxiliary device. The data packet carries the data to be sent to the first device by the target device.

After the auxiliary device receives the data packet, the auxiliary device may forward, to the first device, the data carried in the data packet.

In a possible implementation of the first aspect, after the determining a target device, the method further includes:
when the target device is the first candidate device, establishing a connection to the target device based on the first protocol.

It should be noted that, in some scenarios, the target device selected by the user may alternatively be the first candidate device.

In this case, the first device may establish the connection to the target device based on the first protocol. After the first device establishes the connection to the target device, the first device and the target device may directly perform data exchange based on the connection.

In a possible implementation of the first aspect, the device information packet further includes device information of an electronic device discovered by a next-level auxiliary device corresponding to the auxiliary device.

It should be noted that, in some embodiments, after the auxiliary device receives the scan packet, the auxiliary device may also develop the next-level auxiliary device corresponding to the auxiliary device, and perform device discovery by using a discovery capability of the next-level auxiliary device.

In this case, the device information packet sent by the auxiliary device to the first device may further include the device information of the electronic device discovered by the next-level auxiliary device corresponding to the auxiliary device.

After receiving the device information packet, the first device may display, to the user, the device information of the electronic device discovered by the next-level auxiliary device corresponding to the auxiliary device. This helps the user view device information of more electronic devices.

In other words, according to the foregoing method for developing the auxiliary devices level by level, the first device can make full use of a discovery capability of each electronic device in an environment. In this way, the first device can discover more electronic devices that support different communication protocols, to improve user experience.

According to a second aspect, an embodiment of this application provides a communication method, applied to a first device. The first device supports a first protocol. The method includes:
performing a device discovery operation based on the first protocol, to discover a first candidate device that supports the first protocol;
broadcasting an auxiliary discovery packet based on the first protocol, where the auxiliary discovery packet includes information about a communication protocol supported by the first device or information about a communication protocol currently available for the first device, and the auxiliary discovery packet is used to trigger a second device to perform a device discovery operation;
receiving a device information packet sent by the second device, where the device information packet includes device information of a second candidate device discovered by the second device by performing the device discovery operation based on a second protocol, and the second protocol is different from the first protocol; and
displaying device information of the first candidate device and the device information of the second candidate device.

It should be noted that, in some embodiments, the first device may not determine an auxiliary device, but broadcast the auxiliary discovery packet. The broadcast auxiliary discovery packet carries the information about the communication protocol supported by or currently available for the first device.

After the second device receives the auxiliary packet, the second device may detect whether the second device supports or is currently capable of using the second protocol. The second device is different from the first protocol supported by or currently available for the first device.

If the second device detects that the second device does not support the second protocol, the second device may not respond to the auxiliary discovery packet.

If the second device detects that the second device supports the second protocol, the second device may perform the device discovery operation based on the second protocol, to discover the second candidate device.

Then, the second device may send the device information packet to the first device. The device information packet carries the device information of the second candidate device.

After the first device receives the device information packet, the first device may obtain the device information of the second candidate device from the device information packet, and display, to a user, the device information of the first candidate device and the device information of the second candidate device. In this way, the user learns of an electronic device that exists around.

According to the foregoing communication method, the first device can discover, by using a discovery capability of the auxiliary device, the second candidate device that supports the second protocol. This resolves, to some extent, a problem that a device discovery capability of the first device is insufficient because the first device supports a limited quantity of communication protocols or the first device cannot use the second protocol temporarily. Therefore, the first device can discover as many surrounding devices as possible, to effectively improve user experience. This achieves high ease-of-use and practicability.

In a possible implementation of the second aspect, the method further includes:
detecting a device selection operation of the user;
determining a target device in response to the device selection operation, where the target device is the first candidate device or the second candidate device; and
when the target device is the second candidate device, sending a first connection request to the second device that discovers the target device, where the first connection request is used to trigger the first device to establish a connection to the second device based on the first protocol, and is used to trigger the second device to establish a connection to the target device based on the second protocol.

In a possible implementation of the second aspect, after the sending a first connection request to the second device that discovers the target device, the method further includes:
sending a data packet to the second device, where the data packet includes data to be sent to the target device by the first device.

In a possible implementation of the second aspect, after the determining a target device, the method further includes:
when the target device is the first candidate device, establishing a connection to the target device based on the first protocol.

In a possible implementation of the second aspect, a working status information includes one or more of a power connection status, remaining battery level information, central processing unit usage, memory usage, and communication capability information.

In a possible implementation of the second aspect, the device information packet further includes device information of an electronic device discovered by a next-level auxiliary device corresponding to the second device.

In a possible implementation of the second aspect, the device information includes one or more of a device name, a media access control MAC address, an internet protocol IP address, a device type, and a type of a supported communication protocol.

According to a third aspect, an embodiment of this application provides a communication method, applied to a first device. The first device supports a first protocol. The method includes:
performing a device discovery operation based on the first protocol, to discover a first candidate device that supports the first protocol;
broadcasting an auxiliary discovery packet based on the first protocol, where the auxiliary discovery packet is used to trigger a second device to perform a device discovery operation;
receiving a device information packet sent by the second device, where the device information packet includes device information of a second candidate device discovered by the second device by performing the device discovery operation; and
displaying device information of the first candidate device and the device information of the second candidate device.

It should be noted that, in some embodiments, when the first device broadcasts the auxiliary discovery packet, the auxiliary discovery packet may not carry information about a communication protocol supported by or currently available for the first device.

In this case, the auxiliary discovery packet may be used to trigger the second device to perform the device discovery operation.

When the second device receives the auxiliary discovery packet, the second device may directly perform the device discovery operation, to discover the second candidate device, and send the device information packet to the first device. The device information packet carries the device information of the second candidate device.

After receiving the device information packet, the first device may obtain the device information of the second candidate device from the device information packet, and display, to a user, the device information of the first candidate device and the device information of the second candidate device. In this way, the user learns of an electronic device that exists around.

According to the foregoing communication method, the first device can discover as many surrounding devices as possible by using a discovery capability of the second device. This resolves, to some extent, a problem that a device discovery capability of the first device is insufficient because the first device supports a limited quantity of communication protocols or the first device cannot use some communication protocols temporarily, thereby effectively improving user experience, and achieves high ease-of-use and practicability.

In a possible implementation of the third aspect, the method further includes:
detecting a device selection operation of the user;
determining a target device in response to the device selection operation, where the target device is the first candidate device or the second candidate device; and
when the target device is the second candidate device, sending a first connection request to the second device that discovers the target device, where the first connection request is used to trigger the first device to establish a connection to the second device, and is used to trigger the second device to establish a connection to the target device.

In a possible implementation of the third aspect, after the sending a first connection request to the second device that discovers the target device, the method further includes:
sending a data packet to the second device, where the data packet includes data to be sent to the target device by the first device.

In a possible implementation of the third aspect, after the determining a target device, the method further includes:
when the target device is the first candidate device, establishing a connection to the target device based on the first protocol.

In a possible implementation of the third aspect, a working status information includes one or more of a power connection status, remaining battery level information, central processing unit usage, memory usage, and communication capability information.

In a possible implementation of the third aspect, the device information packet further includes device information of an electronic device discovered by a next-level auxiliary device corresponding to the second device.

In a possible implementation of the third aspect, the device information includes one or more of a device name, a media access control MAC address, an internet protocol IP address, a device type, and a type of a supported communication protocol.

According to a fourth aspect, an embodiment of this application provides a communication method, applied to a second device. The second device supports a first protocol and a second protocol. The method includes:
receiving a query packet that is broadcast by a first device based on the first protocol;
sending a protocol information packet to the first device in response to the query packet, where the protocol information packet indicates a communication protocol supported by the second device, or indicates a communication protocol currently available for the second device;
after receiving a scan packet sent by the first device, performing a device discovery operation based on the second protocol, to discover a second candidate device that supports the second protocol, where the second protocol is different from the first protocol; and
sending a device information packet to the first device, where the device information packet includes device information of the second candidate device.

It should be noted that, when the second device receives the query packet that is broadcast by the first device based on the first protocol, the second device may feed back the protocol information packet to the first device. The protocol information packet indicates the communication protocol supported by or currently available for the second device.

Subsequently, if the second device receives the scan packet sent by the first device, the second device may perform the device discovery operation based on the second protocol, to discover the second candidate device that supports the second protocol. The second protocol is different from the first protocol.

Then, the second device may send the device information packet to the first device. The device information packet includes the device information of the second candidate device.

When the first device receives the device information packet, the first device may display device information of a first candidate device discovered by the first device and the device information of the second candidate device. In this way, the user learns of an electronic device that exists around.

According to the foregoing communication method, the second device can assist the first device in device discovery, and help the first device discover as many surrounding devices as possible. This resolves, to some extent, a problem that a device discovery capability of the first device is insufficient because the first device supports a limited quantity of communication protocols or the first device cannot use the second communication protocol temporarily, thereby effectively improving user experience, and achieves high ease-of-use and practicability.

In a possible implementation of the fourth aspect, the sending a protocol information packet to the first device in response to the query packet specifically includes:
obtaining, in response to the query packet, information about the communication protocol supported by the second device; and
sending the protocol information packet to the first device after determining that the communication protocol supported by the second device includes the second protocol.

It should be noted that, in some embodiments, after receiving the query packet, the second device may detect whether the second device supports or is currently capable of using the second protocol that is different from the first protocol.

The second device may not respond to the query packet if the second device determines that the second device does not support or cannot use the second protocol.

The second device may feed back the protocol information packet to the first device if the second device determines that the second device supports or is currently capable of using the second protocol.

According to the foregoing self-detection method of the second device, a quantity of invalid protocol information packets received by the first device can be reduced, to improve efficiency of processing the protocol information packet by the first device.

In a possible implementation of the fourth aspect, the device information packet further includes device information of an electronic device discovered by a next-level auxiliary device corresponding to the second device.

Before the sending a device information packet to the first device, the method further includes:
determining the next-level auxiliary device corresponding to the second device;
sending an auxiliary scan packet to the next-level auxiliary device, where the auxiliary scan packet is used to trigger the next-level auxiliary device to perform a device discovery operation; and
receiving a response packet sent by the next-level auxiliary device, where the response packet includes the device information of the electronic device discovered by the next-level auxiliary device by performing the device discovery operation.

It should be noted that, in some embodiments, after the second device receives the scan packet, the second device may also determine the next-level auxiliary device.

A manner in which the second device determines the next-level auxiliary device and a manner in which the first device determines an auxiliary device may be a same manner or different manners.

After determining the next-level auxiliary device, the second device may send the auxiliary scan packet to the next-level auxiliary device, to indicate the next-level auxiliary device to perform the device discovery operation.

After performing the device discovery operation, the lower-level auxiliary device may feed back the response packet to the second device. The response packet includes the device information of the electronic device discovered by the lower-level auxiliary device.

In this case, the second device may include, in the device information packet sent to the first device, the device information of the electronic device discovered by the lower-level auxiliary device. This further enhances the discovery capability of the first device. Therefore, the first device can discover more electronic devices, to improve user experience.

According to a fifth aspect, an embodiment of this application provides a communication apparatus, which may be used in a first device. The first device supports a first protocol. The apparatus includes:
a first discovery module, configured to perform a device discovery operation based on the first protocol, to discover a first candidate device that supports the first protocol;
an auxiliary determining module, configured to determine the first candidate device as an auxiliary device in response to determining that the first candidate device further supports a second protocol, where the second protocol is different from the first protocol; or
the auxiliary determining module is configured to implement the following steps:
   broadcasting a query packet based on the first protocol; receiving a protocol information packet, where the protocol information packet is a packet fed back by a second device in response to the query packet, and the protocol information packet indicates a communication protocol supported by the second device, or indicates a communication protocol currently available for the second device; and determining the second device as an auxiliary device based on the protocol information packet indicating that the second device supports or is currently capable of using the second protocol;
   a scan notification module, configured to send a scan packet to the auxiliary device after the auxiliary device is determined, where the scan packet indicates the auxiliary device to perform a device discovery operation;
   a device information module, configured to receive a device information packet sent by the auxiliary device, where the device information packet includes device information of a second candidate device discovered by the auxiliary device by performing the device discovery operation based on the second protocol; and
   an information display module, configured to display device information of the first candidate device and the device information of the second candidate device.

In a possible implementation of the fifth aspect, the auxiliary determining module is specifically configured to implement the following steps:
obtaining working status information corresponding to the second device; and
determining the second device as the auxiliary device based on the protocol information packet indicating that the second device supports or is currently capable of using the second protocol and the working status information corresponding to the second device.

In a possible implementation of the fifth aspect, the first device receives one or more protocol information packets.

The auxiliary determining module is specifically configured to determine the auxiliary device from one or more second devices based on the one or more protocol information packets. The auxiliary device supports or is currently capable of using the second protocol.

In a possible implementation of the fifth aspect, the auxiliary determining module is specifically configured to implement the following steps:
determining, based on the one or more protocol information packets, one or more second protocol sets corresponding to the one or more second devices, where the second protocol set is a set of communication protocols that are supported by or are currently available for the second device; and
determining, as the auxiliary device, a second device corresponding to a second protocol set that includes the second protocol and that is not a proper subset of another second protocol set.

In a possible implementation of the fifth aspect, the first device receives one or more protocol information packets. The protocol information packet is a packet fed back by the second device that supports or is currently capable of using the second protocol.

The auxiliary determining module is specifically configured to determine, as auxiliary devices, all second devices that feed back the protocol information packets.

In a possible implementation of the fifth aspect, the apparatus further includes:
an operation detection module, configured to detect a device selection operation of a user;
a target determining module, configured to determine a target device in response to the device selection operation, where the target device is the first candidate device or the second candidate device; and
a connection establishment module, configured to: when the target device is the second candidate device, send a first connection request to the auxiliary device that discovers the target device, where the first connection request is used to trigger the first device to establish a connection to the auxiliary device based on the first protocol, and is used to trigger the auxiliary device to establish a connection to the target device based on the second protocol.

In a possible implementation of the fifth aspect, the apparatus further includes:
a data transmission module, configured to send a data packet to the auxiliary device, where the data packet includes data to be sent to the target device by the first device.

In a possible implementation of the fifth aspect, the connection establishment module is further configured to: when the target device is the first candidate device, establish a connection to the target device based on the first protocol.

In a possible implementation of the fifth aspect, the working status information includes one or more of a power connection status, remaining battery level information, central processing unit usage, memory usage, and communication capability information.

In a possible implementation of the fifth aspect, the device information packet further includes device information of an electronic device discovered by a next-level auxiliary device corresponding to the auxiliary device.

In a possible implementation of the fifth aspect, the device information includes one or more of a device name, a media access control MAC address, an internet protocol IP address, a device type, and a type of a supported communication protocol.

According to a sixth aspect, an embodiment of this application provides a communication apparatus, used in a first device. The first device supports a first protocol. The apparatus includes:
a first discovery module, configured to perform a device discovery operation based on the first protocol, to discover a first candidate device that supports the first protocol;
an auxiliary discovery module, configured to broadcast an auxiliary discovery packet based on the first protocol, where the auxiliary discovery packet includes information about a communication protocol supported by the first device or information about a communication protocol currently available for the first device, and the auxiliary discovery packet is used to trigger a second device to perform a device discovery operation;
a device information module, configured to receive a device information packet sent by the second device, where the device information packet includes device information of a second candidate device discovered by the second device by performing the device discovery operation based on a second protocol, and the second protocol is different from the first protocol; and
an information display module, configured to display device information of the first candidate device and the device information of the second candidate device.

In a possible implementation of the sixth aspect, the apparatus further includes:
an operation detection module, configured to detect a device selection operation of a user;
a target determining module, configured to determine a target device in response to the device selection operation, where the target device is the first candidate device or the second candidate device; and
a connection establishment module, configured to: when the target device is the second candidate device, send a first connection request to the second device that discovers the target device, where the first connection request is used to trigger the first device to establish a connection to the second device based on the first protocol, and is used to trigger the second device to establish a connection to the target device based on the second protocol.

In a possible implementation of the sixth aspect, the apparatus further includes:
a data transmission module, configured to send a data packet to the second device, where the data packet includes data to be sent to the target device by the first device.

In a possible implementation of the sixth aspect, the connection establishment module is further configured to: when the target device is the first candidate device, establish a connection to the target device based on the first protocol.

In a possible implementation of the sixth aspect, the working status information includes one or more of a power connection status, remaining battery level information, central processing unit usage, memory usage, and communication capability information.

In a possible implementation of the sixth aspect, the device information packet further includes device information of an electronic device discovered by a next-level auxiliary device corresponding to the second device.

In a possible implementation of the sixth aspect, the device information includes one or more of a device name, a media access control MAC address, an internet protocol IP address, a device type, and a type of a supported communication protocol.

According to a seventh aspect, an embodiment of this application provides a communication apparatus, used in a first device. The first device supports a first protocol. The apparatus includes:
a first discovery module, configured to perform a device discovery operation based on the first protocol, to discover a first candidate device that supports the first protocol;
an auxiliary discovery module, configured to broadcast an auxiliary discovery packet based on the first protocol, where the auxiliary discovery packet is used to trigger a second device to perform a device discovery operation;
a device information module, configured to receive a device information packet sent by the second device, where the device information packet includes device information of a second candidate device discovered by the second device by performing the device discovery operation; and
an information display module, configured to display device information of the first candidate device and the device information of the second candidate device.

In a possible implementation of the seventh aspect, the apparatus further includes:
an operation detection module, configured to detect a device selection operation of a user;
a target determining module, configured to determine a target device in response to the device selection operation, where the target device is the first candidate device or the second candidate device; and
a connection establishment module, configured to: when the target device is the second candidate device, send a first connection request to the second device that discovers the target device, where the first connection request is used to trigger the first device to establish a connection to the second device, and is used to trigger the second device to establish a connection to the target device.

In a possible implementation of the seventh aspect, the apparatus further includes:
a data transmission module, configured to send a data packet to the second device, where the data packet includes data to be sent to the target device by the first device.

In a possible implementation of the seventh aspect, the connection establishment module is further configured to: when the target device is the first candidate device, establish a connection to the target device based on the first protocol.

In a possible implementation of the seventh aspect, a working status information includes one or more of a power connection status, remaining battery level information, central processing unit usage, memory usage, and communication capability information.

In a possible implementation of the seventh aspect, the device information packet further includes device information of an electronic device discovered by a next-level auxiliary device corresponding to the second device.

In a possible implementation of the seventh aspect, the device information includes one or more of a device name, a media access control MAC address, an internet protocol IP address, a device type, and a type of a supported communication protocol.

According to an eighth aspect, an embodiment of this application provides a communication apparatus, used in a second device. The second device supports a first protocol and a second protocol. The apparatus includes:
a query receiving module, configured to receive a query packet that is broadcast by a first device based on the first protocol;
a protocol response module, configured to send a protocol information packet to the first device in response to the query packet, where the protocol information packet indicates a communication protocol supported by the second device, or indicates a communication protocol currently available for the second device;
a second discovery module, configured to: after a scan packet sent by the first device is received, perform a device discovery operation based on the second protocol, to discover a second candidate device that supports the second protocol, where the second protocol is different from the first protocol; and
an information sending module, configured to send a device information packet to the first device, where the device information packet includes device information of the second candidate device.

In a possible implementation of the eighth aspect, the protocol response module is specifically configured to implement the following steps:
obtaining, in response to the query packet, information about the communication protocol supported by the second device; and
sending the protocol information packet to the first device after it is determined that the communication protocol supported by the second device includes the second protocol.

In a possible implementation of the eighth aspect, the device information packet further includes device information of an electronic device discovered by a next-level auxiliary device corresponding to the second device.

The apparatus further includes:
an auxiliary extension module, configured to determine the next-level auxiliary device corresponding to the second device;
an extension scan module, configured to send an auxiliary scan packet to the next-level auxiliary device, where the auxiliary scan packet is used to trigger the next-level auxiliary device to perform a device discovery operation; and
an extension information module, configured to receive a response packet sent by the next-level auxiliary device, where the response packet includes the device information of the electronic device discovered by the next-level auxiliary device by performing the device discovery operation.

According to a ninth aspect, an embodiment of this application provides an electronic device, including a memory, a processor, and a computer program that is stored in the memory and that is run on the processor. When the processor is configured to execute the computer program, the electronic device is enabled to perform the method according to any one of the first aspect to the fourth aspect.

According to a tenth aspect, an embodiment of this application provides a computer-readable storage medium. The computer-readable storage medium is configured to store a computer program. When the computer program is executed by a processor, the method according to any one of the first aspect to the fourth aspect is implemented.

According to an eleventh aspect, an embodiment of this application provides a computer program product. When the computer program product is configured to run on an electronic device, the electronic device is enabled to perform the method according to any one of the first aspect to the fourth aspect.

According to a twelfth aspect, an embodiment of this application provides a chip system. The chip system includes a memory and a processor. The processor is configured to execute a computer program stored in the memory, to implement the method according to any one of the first aspect to the fourth aspect.

Compared with those in the conventional technology, embodiments of this application have the following beneficial effects.

In the communication method provided in embodiments of this application, when performing device discovery, the first device can perform the discovery operation based on the first protocol supported by the first device, to discover the first candidate device that supports the first protocol.

In addition, the first device can determine, from the surrounding electronic device (namely, the second device that feeds back the protocol information packet or the first candidate device) that supports the first protocol, the auxiliary device that supports the second protocol. The second protocol is different from the first protocol.

Subsequently, the first device can indicate the auxiliary device to perform the device discovery operation, and discover, by using the discovery capability of the auxiliary device, the second candidate device that supports the second protocol. This resolves, to some extent, the problem that the device discovery capability of the first device is insufficient because the first device supports a limited quantity of communication protocols or the first device cannot use the second protocol temporarily. Therefore, the first device can discover as many surrounding devices as possible, to effectively improve user experience.

### BRIEF DESCRIPTION OF DRAWINGS

FIG. 1 is a diagram of a system architecture of a communication system according to an embodiment of this application;
FIG. 2 is a diagram of a set relationship according to an embodiment of this application;
FIG. 3 is a diagram of another set relationship according to an embodiment of this application;
FIG. 4 is a diagram of a structure of an electronic device according to an embodiment of this application;
FIG. 5A and FIG. 5B are a schematic flowchart of a communication method according to an embodiment of this application;
FIG. 6 is a diagram of a system architecture of another communication system according to an embodiment of this application;
FIG. 7 is an interaction flowchart of a communication method according to an embodiment of this application;
FIG. 8(a) and FIG. 8(b) are a diagram of a scenario according to an embodiment of this application;
FIG. 9 is a diagram of another scenario according to an embodiment of this application;
FIG. 10 is a diagram of another scenario according to an embodiment of this application;
FIG. 11 is a diagram of another scenario according to an embodiment of this application;
FIG. 12 is a diagram of another scenario according to an embodiment of this application;
FIG. 13 is a diagram of a system architecture of another communication system according to an embodiment of this application;
FIG. 14 is an interaction flowchart of another communication method according to an embodiment of this application;
FIG. 15 is a diagram of another scenario according to an embodiment of this application;
FIG. 16 is a diagram of another scenario according to an embodiment of this application;
FIG. 17 is a diagram of another scenario according to an embodiment of this application;
FIG. 18 is a diagram of another scenario according to an embodiment of this application;
FIG. 19 is a diagram of a system architecture of another communication system according to an embodiment of this application;
FIG. 20 is a diagram of another scenario according to an embodiment of this application;
FIG. 21 is a diagram of another scenario according to an embodiment of this application;
FIG. 22 is a diagram of a structure of a packet according to an embodiment of this application;
FIG. 23 is a diagram of a structure of another packet according to an embodiment of this application;
FIG. 24 is a diagram of a structure of another packet according to an embodiment of this application; and
FIG. 25 is a diagram of a structure of a communication apparatus according to an embodiment of this application.

### DESCRIPTION OF EMBODIMENTS

In the following descriptions, for illustration instead of limitation, specific details such as a particular system structure and a technology are provided to make a thorough understanding of embodiments of this application. However, a person skilled in the art should know that this application may also be implemented in other embodiments without these specific details. In other cases, detailed descriptions of well-known systems, apparatuses, circuits, and methods are omitted, so that this application is described without being obscured by unnecessary details.

It should be understood that, when being used in the specification and the appended claims of this application, the term "include" indicates presence of described features, entireties, steps, operations, elements, and/or components, but does not exclude presence or addition of one or more other features, entireties, steps, operations, elements, components, and/or sets thereof.

It should be further understood that the term "and/or" used in the specification and the appended claims of this application means any combination and all possible combinations of one or more of associated enumerated items, and includes these combinations.

As being used in the specification and the appended claims of this application, the term "if" may be interpreted as "when", "once", "in response to determining", or "in response to detecting" depending on the context. Similarly, the phrase "if it is determined that" or "if (a described condition or event) is detected" may be interpreted as a meaning of "once it is determined that", "in response to determining", "once (a described condition or event) is detected", or "in response to detecting (a described condition or event)" depending on the context.

In addition, in descriptions of the specification and the appended claims of this application, the terms "first", "second", "third", and the like are merely intended for a purpose of distinction and description, but shall not be understood as an indication or an implication of relative importance.

Reference to "an embodiment", "some embodiments", or the like described in the specification of this application means that one or more embodiments of this application include a specific feature, structure, or feature described with reference to the embodiment. Therefore, the statements "in an embodiment", "in some embodiments", "in some other embodiments", "in other embodiments", and the like that appear in different places in this specification do not necessarily mean referring to a same embodiment. Instead, the statements mean "one or more but not all of embodiments", unless otherwise specifically emphasized in another manner. The terms "include", "comprise", "have", and variants of the terms all mean "include but not limited to", unless otherwise specifically emphasized in another manner.

With continuous development of the smart home industry, more internet of things devices appear in people's homes. Different internet of things devices may support different communication protocols.

For example, in a home of a user, there may be internet of things devices such as a router, a smart curtain, a smart large screen, a Bluetooth sound box, a smart lamp, a smart socket, and a desktop computer. Herein, internet of things devices such as the router, the smart curtain, and the smart large screen may support a Wi-Fi protocol; internet of things devices such as the Bluetooth sound box and the smart lamp may support a Bluetooth protocol; internet of things devices such as the smart socket may support a ZigBee (ZigBee) protocol; and internet of things devices such as the desktop computer may support an ethernet communication protocol and the like.

When the user wants to control an internet of things device by using a personal device of the user (for example, a mobile phone or a tablet computer of the user), the personal device of the user should support a communication protocol used by the internet of things device. If the personal device of the user does not support the communication protocol used by the internet of things device, the personal device of the user cannot discover the internet of things device, and cannot be connected to the internet of things device.

For example, it is assumed that the smart socket in the home of the user supports only the ZigBee protocol. When the user wants to use the mobile phone of the user to control the smart socket, if the mobile phone of the user supports the ZigBee protocol, the mobile phone of the user may discover the smart socket, establish a connection to the smart socket, and control the smart socket through the connection. If the mobile phone of the user does not support the ZigBee protocol, the mobile phone of the user cannot discover the smart socket, and cannot establish a connection to the smart socket. The user cannot control the smart socket by using the mobile phone.

However, in an actual application scenario, the personal device of the user can support a limited quantity of communication protocols. As a result, the personal device of the user may not be able to support a communication protocol used by some internet of things devices, and cannot discover these internet of things devices, affecting user experience.

In some other scenarios, the personal device of the user supports the communication protocol used by the internet of things device, but the personal device of the user cannot communicate with the internet of things device temporarily by using the communication protocol used by the internet of things device.

For example, it is assumed that the mobile phone of the user supports the Wi-Fi protocol, and the mobile phone establishes a Wi-Fi connection to a large-screen device to project, onto the large-screen device for display, content displayed on the mobile phone. If the mobile phone is allowed to establish the Wi-Fi connection to only one device at a time, the mobile phone cannot communicate with another device temporarily by using the Wi-Fi protocol. For example, the mobile phone cannot be connected to the router temporarily by using the Wi-Fi protocol. For another example, the mobile phone cannot be connected to the smart sound box temporarily for communication by using the Wi-Fi protocol.

In view of this, embodiments of this application provide a communication method. A first device supports a communication protocol in a first protocol set. The first device may select an auxiliary device from a surrounding second device that supports a first protocol (namely, a communication protocol in the first protocol set). The auxiliary device supports a communication protocol in a second protocol set. The second protocol set includes at least one communication protocol that is not in the first protocol set. Then, the first device may perform device discovery by using the auxiliary device. In this way, the first device may discover an electronic device that supports a second protocol (namely, a communication protocol in the second protocol set). This resolves, to some extent, a problem that a device discovery capability of the first device is insufficient because the first device supports a limited quantity of communication protocols (or the first device cannot use the second protocol temporarily). Therefore, the first device can discover as many surrounding devices as possible.

Further, in the communication method provided in embodiments of this application, by using the auxiliary device, the first device may further communicate with the electronic device that supports the second protocol, and control the electronic device that supports the second protocol. In this way, the first device can control more types of electronic devices. Therefore, the communication method provided in embodiments of this application effectively improves user experience, and has high ease-of-use and practicability.

In some scenarios, according to the communication method provided in embodiments of this application, a distance at which the first device can discover a device may also be extended. It may be understood that a protocol like a Wi-Fi protocol or a Bluetooth protocol is usually a near field communication protocol (which is not specifically an NFC protocol herein, but is a general term). When a distance between two devices exceeds a specific radius range, discovery based on the near field communication protocol cannot be performed. Therefore, according to the communication method provided in embodiments of this application, the first device can discover a device beyond a signal radius range of the communication protocol supported by the first device.

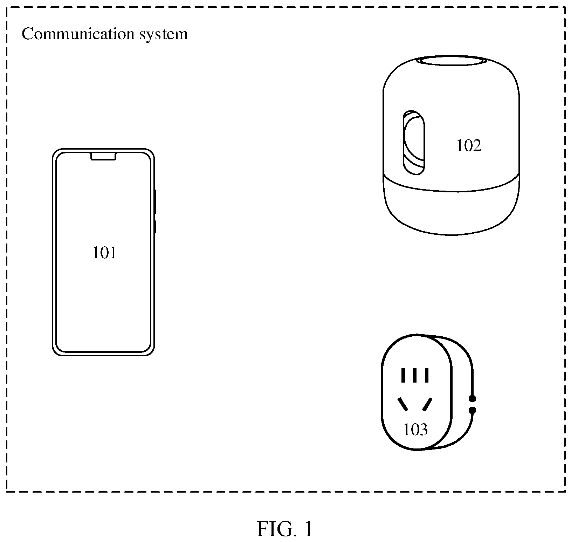

First, refer to FIG. 1. FIG. 1 shows an example of a communication system to which an embodiment of this application is applicable. As shown in FIG. 1, the communication system may include a first device 101, one or more second devices 102 (only one is shown in FIG. 1), and one or more third devices 103 (only one is shown in FIG. 1).

The first device 101 may be understood as an electronic device used by a user, or the first device 101 may be understood as an electronic device that detects a device scan operation of a user.

The first device 101 supports a communication protocol in a first protocol set. In other words, the first protocol set includes the communication protocol supported by the first device 101. The first protocol set may include one or more communication protocols. The communication protocol may include a wired communication protocol and/or a wireless communication protocol. For example, the communication protocol may include any one or more of communication protocols such as a Wi-Fi protocol, a Bluetooth protocol, a ZigBee (ZigBee) protocol, a power line communication (power line communication, PLC) protocol, an ethernet communication protocol, a universal serial bus (universal serial bus, USB) protocol, and an ultra-wideband (ultra-wide band, UWB) protocol.

The second device 102 supports a communication protocol in a second protocol set. In other words, the second protocol set includes the communication protocol supported by the second device 102. The second protocol set may also include one or more of the foregoing communication protocols. In addition, the second protocol set includes at least one communication protocol in the first protocol set. In other words, there is a same communication protocol in the communication protocol supported by the first device 101 and the communication protocol supported by the second device 102 (or there is a non-empty intersection set between the first protocol set and the second protocol set).

The third device 103 supports a communication protocol in a third protocol set. In other words, the third protocol set includes the communication protocol supported by the third device 103. The third protocol set may also include one or more of the foregoing communication protocols. In addition, the third protocol set does not include any communication protocol in the first protocol set. In other words, there is no same communication protocol in the communication protocol supported by the first device 101 and the communication protocol supported by the third device 103 (or the first protocol set and the third protocol set are mutually exclusive).

In the communication system, the first device 101 can communicate with the second device 102 based on a communication protocol supported by both the first device 101 and the second device 102, but the first device 101 cannot directly communicate with the third device 103.

If there is a same communication protocol in the communication protocol supported by the second device 102 and the communication protocol supported by the third device 103 (or there is a non-empty intersection set between the second protocol set and the third protocol set), the second device 102 can communicate with the third device 103 based on a communication protocol supported by both the second device 102 and the third device 103. In this case, in a method provided in embodiments of this application, the first device 101 may determine the second device 102 as an auxiliary device, and indirectly communicate with the third device 103 by using the auxiliary device.

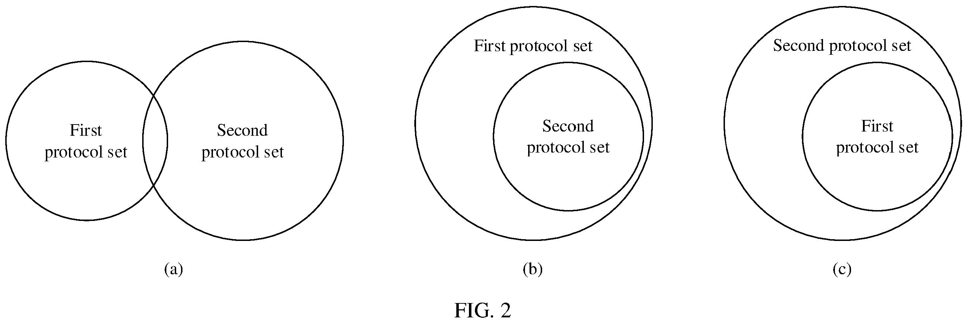

FIG. 2 shows examples of several possible relationships between the first protocol set and the second protocol set. For example, in an example, as shown in a scenario in (a) in FIG. 2, the first protocol set and the second protocol set may be in an intersection relationship. In this case, the second protocol set may include one or more communication protocols in the first protocol set, and the second protocol set may include one or more communication protocols that are not in the first protocol set. In another example, as shown in a scenario in (b) in FIG. 2, the first protocol set may include the second protocol set. In this case, all the communication protocols in the second protocol set are in the first protocol set. In another example, as shown in a scenario in (c) in FIG. 2, the second protocol set may include the first protocol set. In this case, all the communication protocols in the first protocol set are in the second protocol set.

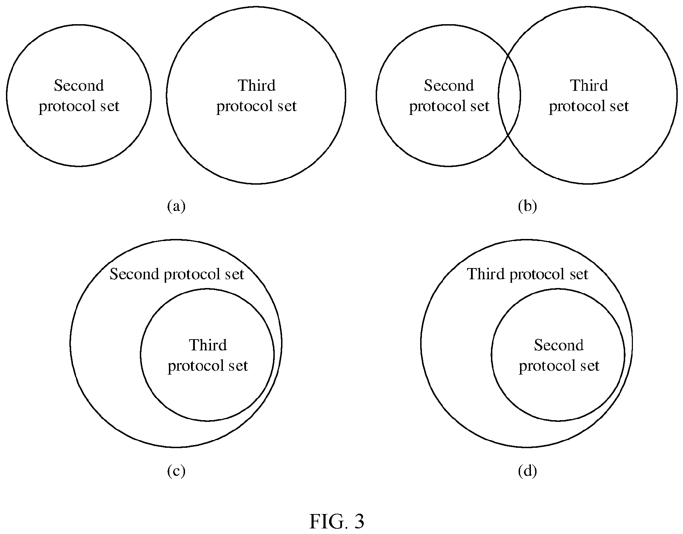

FIG. 3 shows examples of several possible relationships between the second protocol set and the third protocol set. For example, in an example, as shown in a scenario in (a) in FIG. 3, the second protocol set and the third protocol set may be in a separated relationship. In this case, the second device 102 that supports the second protocol set cannot communicate with the third device 103 that supports the third protocol set. In another example, as shown in a scenario in (b) in FIG. 3, a scenario in (c) in FIG. 3, or a scenario in (d) in FIG. 3, the second protocol set and the third protocol set may be in an intersection relationship, the second protocol set may include the third protocol set, or the third protocol set may include the second protocol set. In this case, the second device 102 that supports the second protocol set and the third device 103 that supports the third protocol set may communicate based on a communication protocol supported by both the second device 102 and the third device 103.

In an embodiment of this application, the communication protocol in the first protocol set may be defined as a first protocol, and the communication protocol in the second protocol set may be defined as a second protocol.

It may be understood that, in embodiments of this application, that an electronic device supports a communication protocol may be understood as that the electronic device has a communication module corresponding to the communication protocol, and the electronic device may perform, based on the communication module, data exchange with another electronic device that supports the same communication protocol.

In some other scenarios, the first/second/third protocol set may alternatively be correspondingly a set including a communication protocol currently available for the first device 101/second device 102/third device 103. In other words, a communication protocol that can be supported but cannot be currently used temporarily by the first device 101/the second device 102/third device 103 is correspondingly not included in the first/second/third protocol set. For example, a mobile phone of the user supports the Wi-Fi protocol, and the mobile phone currently already establishes a Wi-Fi connection to a large-screen device for projection. As a result, the mobile phone cannot currently use the Wi-Fi protocol temporarily to communicate with another device based on the Wi-Fi protocol. In this case, a first protocol set corresponding to the mobile phone does not include the Wi-Fi protocol.

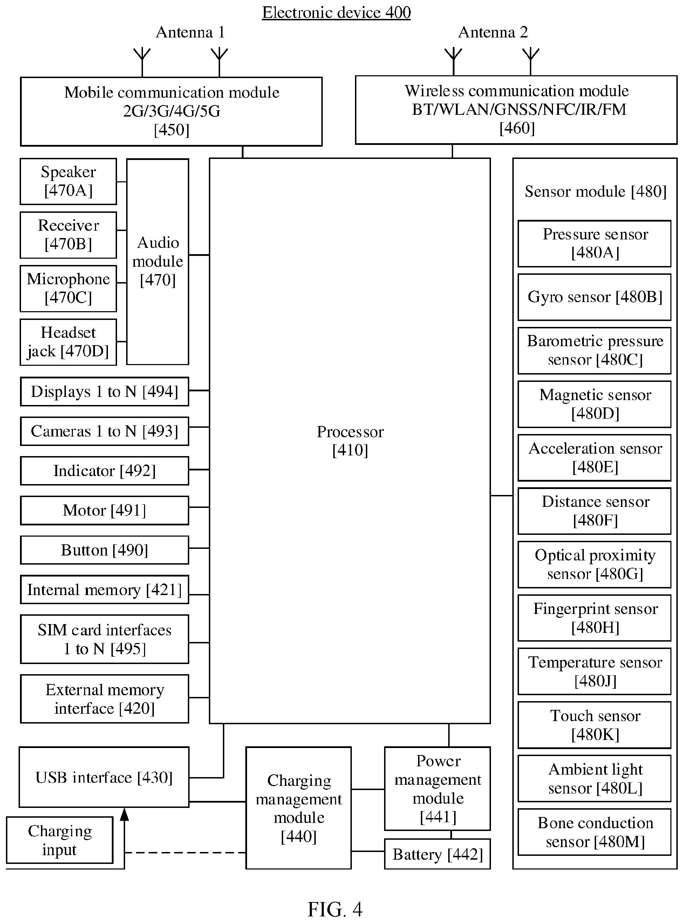

FIG. 4 shows an example of a diagram of a structure of an electronic device 400 according to an embodiment of this application. The electronic device 400 may be the first device 101, the second device 102, or the third device 103.

The electronic device 400 may include a processor 410, an external memory interface 420, an internal memory 421, a universal serial bus (universal serial bus, USB) interface 430, a charging management module 440, a power management module 441, a battery 442, an antenna 1, an antenna 2, a mobile communication module 450, a wireless communication module 460, an audio module 470, a speaker 470A, a receiver 470B, a microphone 470C, a headset jack 470D, a sensor module 480, a button 490, a motor 491, an indicator 492, a camera 493, a display 494, a subscriber identification module (subscriber identification module, SIM) card interface 495, and the like. The sensor module 480 may include a pressure sensor 480A, a gyro sensor 480B, a barometric pressure sensor 480C, a magnetic sensor 480D, an acceleration sensor 480E, a distance sensor 480F, an optical proximity sensor 480G, a fingerprint sensor 480H, a temperature sensor 480J, a touch sensor 480K, an ambient light sensor 480L, a bone conduction sensor 480M, and the like.

The processor 410 may include one or more processing units. For example, the processor 410 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction reading and instruction execution.

A memory may be further disposed in the processor 410, and is configured to store instructions and data. In some embodiments, the memory in the processor 410 is a cache. The memory may store instructions or data just used or cyclically used by the processor 410. If the processor 410 needs to use the instructions or the data again, the processor may directly invoke the instructions or the data from the memory. This avoids repeated access, and reduces a waiting time of the processor 410, thereby improving system efficiency.

In some embodiments, the processor 410 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 410 may include a plurality of groups of I2C buses. The processor 410 may be separately coupled to the touch sensor 480K, a charger, a flash, the camera 493, and the like through different I2C bus interfaces. For example, the processor 410 may be coupled to the touch sensor 480K through the I2C interface, so that the processor 410 communicates with the touch sensor 480K through the I2C bus interface, to implement a touch function of the electronic device 400.

The I2S interface may be configured to perform audio communication. In some embodiments, the processor 410 may include a plurality of groups of I2S buses. The processor 410 may be coupled to the audio module 470 through the I2S bus, to implement communication between the processor 410 and the audio module 470. In some embodiments, the audio module 470 may transmit an audio signal to the wireless communication module 460 through the I2S interface, to implement a function of answering a call through a Bluetooth headset.

The PCM interface may also be configured to: perform audio communication, and sample, quantize, and encode an analog signal. In some embodiments, the audio module 470 may be coupled to the wireless communication module 460 through a PCM bus interface. In some embodiments, the audio module 470 may alternatively transmit an audio signal to the wireless communication module 460 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 410 to the wireless communication module 460. For example, the processor 410 communicates with a Bluetooth module in the wireless communication module 460 through the UART interface, to implement a Bluetooth function. In some embodiments, the audio module 470 may transmit an audio signal to the wireless communication module 460 through the UART interface, to implement a function of playing music through a Bluetooth headset.

The MIPI interface may be configured to connect the processor 410 to a peripheral component like the display 494 or the camera 493. The MIPI interface includes a camera serial interface (camera serial interface, CSI), a display serial interface (display serial interface, DSI), and the like. In some embodiments, the processor 410 communicates with the camera 493 through the CSI interface, to implement a photographing function of the electronic device 400. The processor 410 communicates with the display 494 through the DSI interface, to implement a display function of the electronic device 400.

The GPIO interface may be configured by using software. The GPIO interface may be configured as a control signal or a data signal. In some embodiments, the GPIO interface may be configured to connect the processor 410 to the camera 493, the display 494, the wireless communication module 460, the audio module 470, the sensor module 480, or the like. The GPIO interface may alternatively be configured as an I2C interface, an I2S interface, a UART interface, an MIPI interface, or the like.

The USB interface 430 is an interface that conforms to a USB standard specification, and may be specifically a mini USB interface, a micro USB interface, a USB Type-C interface, or the like. The USB interface 430 may be configured to connect to a charger to charge the electronic device 400, may be configured to transmit data between the electronic device 400 and a peripheral device, or may be configured to connect to a headset, to play an audio through the headset. The interface may be alternatively configured to connect to another electronic device like an AR device.

It may be understood that an interface connection relationship between modules illustrated in this embodiment of this application is merely an example for description, and constitutes no limitation on the structure of the electronic device 400. In some other embodiments of this application, the electronic device 400 may alternatively use an interface connection manner different from that in the foregoing embodiment, or use a combination of a plurality of interface connection manners.

The charging management module 440 is configured to receive a charging input from a charger. The charger may be a wireless charger or a wired charger. In some embodiments of wired charging, the charging management module 440 may receive a charging input from the wired charger through the USB interface 430. In some embodiments of wireless charging, the charging management module 440 may receive a wireless charging input through a wireless charging coil of the electronic device 400. When charging the battery 442, the charging management module 440 may further supply power to the electronic device by using the power management module 441.

The power management module 441 is configured to connect the battery 442, the charging management module 440, and the processor 410. The power management module 441 receives an input from the battery 442 and/or an input of the charging management module 440, and supplies power to the processor 410, the internal memory 421, the display 494, the camera 493, the wireless communication module 460, and the like. The power management module 441 may be further configured to monitor parameters such as a battery capacity, a battery cycle count, and a battery health status (electric leakage or impedance). In some other embodiments, the power management module 441 may be alternatively disposed in the processor 410. In some other embodiments, the power management module 441 and the charging management module 440 may alternatively be disposed in a same component.

A wireless communication function of the electronic device 400 may be implemented by using the antenna 1, the antenna 2, the mobile communication module 450, the wireless communication module 460, the modem processor, the baseband processor, and the like.

The antenna 1 and the antenna 2 are configured to: transmit and receive electromagnetic wave signals. Each antenna in the electronic device 400 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 450 may provide a solution that is applied to the electronic device 400 and that includes wireless communication such as 2G/3G/4G/5G. The mobile communication module 450 may include at least one filter, a switch, a power amplifier, a low noise amplifier (low noise amplifier, LNA), and the like. The mobile communication module 450 may receive an electromagnetic wave through the antenna 1, perform processing such as filtering or amplification on the received electromagnetic wave, and transmit a processed electromagnetic wave to the modem processor for demodulation. The mobile communication module 450 may further amplify a signal obtained after modulation by the modem processor, and convert an amplified signal into an electromagnetic wave for radiation through the antenna 1. In some embodiments, at least some functional modules of the mobile communication module 450 may be disposed in the processor 410. In some embodiments, at least some functional modules of the mobile communication module 450 and at least some modules of the processor 410 may be disposed in a same component.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and then transferred to the application processor. The application processor outputs a sound signal by using an audio device (which is not limited to the speaker 470A, the receiver 470B, or the like), or displays an image or a video through the display 494. In some embodiments, the modem processor may be an independent component. In some other embodiments, the modem processor may be independent of the processor 410, and is disposed in a same component as the mobile communication module 450 or another functional module.

The wireless communication module 460 may provide a solution that is applied to the electronic device 400 and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near-field communication, NFC), and an infrared (infrared, IR) technology. The wireless communication module 460 may be one or more components integrating at least one communication processing module. The wireless communication module 460 receives an electromagnetic wave through the antenna 2, performs frequency modulation and filtering on an electromagnetic wave signal, and sends a processed signal to the processor 410. The wireless communication module 460 may further receive a to-be-sent signal from the processor 410, perform frequency modulation and amplification on the to-be-sent signal, and convert a processed signal into an electromagnetic wave for radiation through the antenna 2.

In some embodiments, in the electronic device 400, the antenna 1 and the mobile communication module 450 are coupled, and the antenna 2 and the wireless communication module 460 are coupled, so that the electronic device 400 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 400 implements a display function by using the GPU, the display 494, the application processor, and the like. The GPU is a microprocessor for image processing, and is connected to the display 494 and the application processor. The GPU is configured to: perform mathematical and geometric computation, and render an image. The processor 410 may include one or more GPUs that execute program instructions to generate or change display information.

The display 494 is configured to display an image, a video, and the like. The display 494 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 400 may include one or N displays 494, where N is a positive integer greater than 1.

The electronic device 400 may implement a photographing function by using the ISP, the camera 493, the video codec, the GPU, the display 494, the application processor, and the like.

The ISP is configured to process data fed back by the camera 493. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 493.

The camera 493 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 400 may include one or N cameras 493, where N is a positive integer greater than 1.

The digital signal processor is configured to process a digital signal, and may further process another digital signal in addition to the digital image signal. For example, when the electronic device 400 selects a frequency, the digital signal processor is configured to perform Fourier transform and the like on frequency energy.

The video codec is configured to compress or decompress a digital video. The electronic device 400 may support one or more types of video codecs. In this way, the electronic device 400 can play or record videos in a plurality of encoding formats such as moving picture experts group (moving picture experts group, MPEG)-1, MPEG-4, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 400 may be implemented by using the NPU, for example, image recognition, facial recognition, speech recognition, and text understanding.

The external memory interface 420 may be configured to connect to an external storage card, for example, a micro SD card, to extend a storage capability of the electronic device 400. The external storage card communicates with the processor 410 through the external memory interface 420, to implement a data storage function. For example, files such as music and a video are stored in the external storage card.

The internal memory 421 may be configured to store computer-executable program code, where the executable program code includes instructions. The internal memory 421 may include a program storage area and a data storage area. The program storage area may store an operating system, an application required by at least one function (for example, a sound playing function or an image playing function), and the like. The data storage area may store data (for example, audio data and a phone book) created during use of the electronic device 400, and the like. In addition, the internal memory 421 may include a high-speed random access memory, and may further include a non-volatile memory, for example, at least one magnetic disk storage component, a flash memory component, and a universal flash storage (universal flash storage, UFS). The processor 410 runs the instructions stored in the internal memory 421 and/or the instructions stored in the memory disposed in the processor, to perform various function applications of the electronic device 400 and data processing.

The electronic device 400 may implement an audio function, for example, music playing or recording, by using the audio module 470, the speaker 470A, the receiver 470B, the microphone 470C, the headset jack 470D, the application processor, and the like.

The audio module 470 is configured to convert digital audio information into an analog audio signal output, and is also configured to convert an analog audio input into a digital audio signal. The audio module 470 may further be configured to encode and decode audio signals. In some embodiments, the audio module 470 may be disposed in the processor 410, or some functional modules of the audio module 470 are disposed in the processor 410.

The speaker 470A, also referred to as a "loudspeaker", is configured to convert an audio electrical signal into a sound signal. The electronic device 400 may be used to listen to music or answer a call in a hands-free mode through the speaker 470A.

The receiver 470B, also referred to as an "earpiece", is configured to convert an audio electrical signal into a sound signal. When a call is answered or audio information is listened to through the electronic device 400, the receiver 470B may be put close to a human ear to listen to a voice.

The microphone 470C, also referred to as a "mike" or a "mic", is configured to convert a sound signal into an electrical signal. When making a call or sending voice information, a user may make a sound near the microphone 470C through the mouth of the user, to input a sound signal to the microphone 470C. At least one microphone 470C may be disposed in the electronic device 400. In some other embodiments, two microphones 470C may be disposed in the electronic device 400, to collect a sound signal and implement a noise reduction function. In some other embodiments, three, four, or more microphones 470C may alternatively be disposed in the electronic device 400, to collect a sound signal, implement noise reduction, and identify a sound source, so as to implement a directional recording function and the like.

The headset jack 470D is configured to connect to a wired headset. The headset jack 470D may be a USB interface 430, or may be a 3.5 mm open mobile terminal platform (open mobile terminal platform, OMTP) standard interface or cellular telecommunications industry association of the USA (cellular telecommunications industry association of the USA, CTIA) standard interface.

The button 490 includes a power button, a volume button, and the like. The button 490 may be a mechanical button, or a touch button. The electronic device 400 may receive a button input, and generate a button signal input related to a user setting and function control of the electronic device 400.

The motor 491 may generate a vibration prompt. The motor 491 may be configured to provide an incoming call vibration prompt and a touch vibration feedback. For example, touch operations performed on different applications (for example, photographing and audio playing) may correspond to different vibration feedback effects. The motor 491 may also correspond to different vibration feedback effects for touch operations performed on different areas of the display 494. Different application scenarios (for example, a time reminder, information receiving, an alarm clock, and a game) may also correspond to different vibration feedback effects. A touch vibration feedback effect may be further customized.

The indicator 492 may be an indicator light, and may be configured to indicate a charging status or a power change, or may be configured to indicate a message, a missed call, a notification, or the like.

The SIM card interface 495 is configured to connect a SIM card. The SIM card may be inserted into the SIM card interface 495 or removed from the SIM card interface 495, to implement contact with or separation from the electronic device 400. The electronic device 400 may support one or N SIM card interfaces, where N is a positive integer greater than 1. The SIM card interface 495 may support a nano-SIM card, a micro-SIM card, a SIM card, and the like. A plurality of cards may be inserted into a same SIM card interface 495 at the same time. The plurality of cards may be of a same type or different types. The SIM card interface 495 may also be compatible with different types of SIM cards. The SIM card interface 495 may also be compatible with the external storage card. The electronic device 400 interacts with a network through the SIM card, to implement functions such as a call and data communication. In some embodiments, the electronic device 400 uses an eSIM, namely, an embedded SIM card. The eSIM card may be embedded in the electronic device 400, and cannot be separated from the electronic device 400.

It may be understood that the structure shown in this embodiment of this application constitutes no specific limitation on the electronic device 400. In some other embodiments of this application, the electronic device 400 may include more or fewer components than those shown in the figure, or combine of some of components, or split of some of components, or have different layouts of the components. The components shown in the figure may be implemented by hardware, software, or a combination of software and hardware.

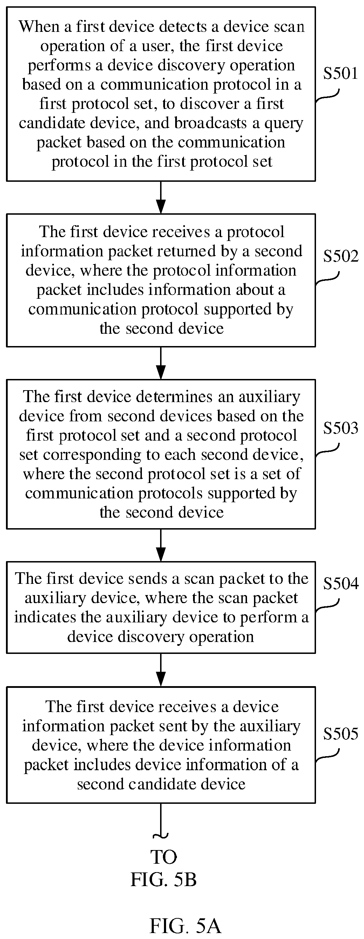

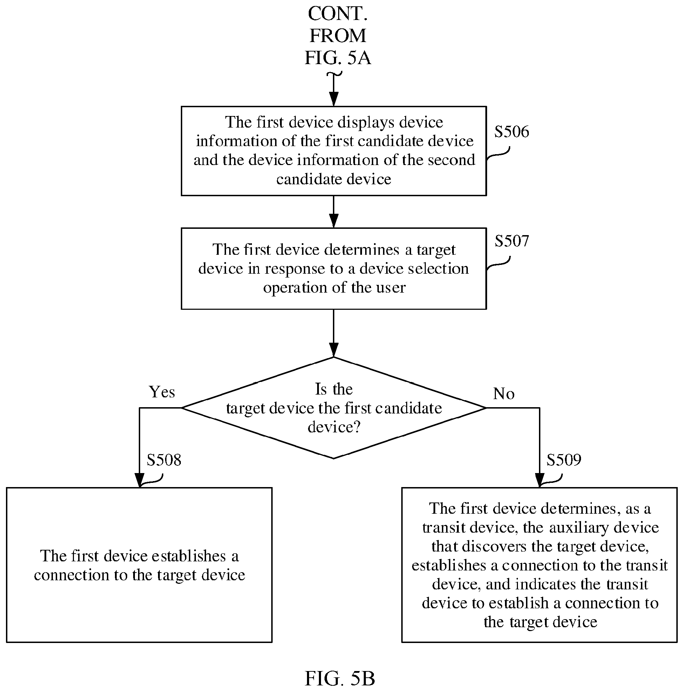

With reference to the communication system shown in FIG. 1, the electronic device shown in FIG. 4, a flowchart shown in FIG. 5A and FIG. 5B, and a specific application scenario, the following describes in detail a communication method provided in an embodiment of this application.

Step S501: When a first device detects a device scan operation of a user, the first device performs a device discovery operation based on a communication protocol in a first protocol set, to discover a first candidate device, and broadcasts a query packet based on the communication protocol in the first protocol set.

In an embodiment of this application, the first device may be understood as an electronic device that is being used by the user. For example, the first device may be any one or more of electronic devices such as a mobile phone, a tablet computer, a smart large screen, and a smartwatch that are being used by the user.

When the user wants to use the first device to communicate with another electronic device, the user may perform the device scan operation on the first device, to control the first device to perform device discovery.

A form of the device scan operation may be set based on an actual requirement. For example, in an example, it is assumed that a display of the first device is a touchscreen. The device scan operation may include one or more of operations such as a tapping operation, a touching and holding operation, a sliding operation, and a knocking operation that are performed on the touchscreen. In another example, it is assumed that the first device is equipped with an input device like a keyboard or a mouse. The device scan operation may include one or more of operations such as clicking the mouse, dragging the mouse, and pressing a button.

After the first device detects the device scan operation, the first device may perform the device discovery operation based on the communication protocol in the first protocol set. In some other embodiments, the first device may automatically perform a device discovery operation without requiring a device scan operation of a user. For example, the first device periodically and automatically performs the device discovery operation.

The first device supports the communication protocol in the first protocol set. The first protocol set may include one or more communication protocols. The communication protocol may include a wired communication protocol and/or a wireless communication protocol. For example, the first protocol set may include any one or more of communication protocols such as a Wi-Fi protocol, a Bluetooth protocol, a ZigBee protocol, a PLC protocol, an ethernet communication protocol, a USB protocol, and a UWB protocol.

In an embodiment of this application, the communication protocol in the first protocol set may be defined as a first protocol.

In addition, in some embodiments, the communication protocol in the first protocol set may be understood as a communication protocol that may be currently used by the first device. Some communication protocols that can be supported but cannot be currently used temporarily by the first device may not be included in the first protocol set.

When the first device performs the device discovery operation, the first device may listen to a surrounding first protocol-based first packet based on the communication protocol in the first protocol set. Then, the first device may parse the first packet obtained through listening, and extract, from the first packet, device information of an electronic device that sends the first packet, to discover the electronic device that sends the first packet.

Content of the device information may be set based on an actual requirement. For example, the device information may include one or more of information such as a media access control (Media Access Control, MAC) address, an internet protocol address (Internet Protocol Address, IP address), a device type, a communication protocol type, and a device name.

For example, it is assumed that the first device supports the Bluetooth protocol and the Wi-Fi protocol. When performing the device discovery operation, the first device may listen to a surrounding Bluetooth packet based on the Bluetooth protocol, and the first device may listen to a surrounding Wi-Fi packet based on the Wi-Fi protocol. When the first device obtains the Bluetooth packet through listening, the first device may extract, from the Bluetooth packet, device information of a Bluetooth device that sends the Bluetooth packet, and discover, based on the device information, the Bluetooth device that sends the Bluetooth packet. When the first device obtains the Wi-Fi packet through listening, the first device may extract, from the Wi-Fi packet, device information of a Wi-Fi device that sends the Wi-Fi packet, and discover, based on the device information, the Wi-Fi device that sends the Wi-Fi packet.

In an embodiment of this application, a device directly discovered by the first device based on the first protocol supported by the first device and that also supports the first protocol is referred to as a "first candidate device". The first candidate device may send the first packet based on the first protocol, and the first packet may be obtained by the first device through listening. In this way, the first candidate device may be directly discovered by the first device.

In addition, to discover a surrounding electronic device that does not support the first protocol, the first device may further broadcast the query packet based on the communication protocol in the first protocol set. The query packet is used to request a second device to return, to the first device, information about a communication protocol supported by the second device.

The second device may be understood as an electronic device that supports at least one first protocol, the second device may be understood as an electronic device that receives the query packet, or the second device may be understood as an electronic device that responds to the query packet.

Step S502: The first device receives a protocol information packet returned by the second device, where the protocol information packet includes the information about the communication protocol supported by the second device.

After the first device broadcasts the query packet, the second device that receives the query packet may query the communication protocol supported by the second device, and return the protocol information packet to the first device. The protocol information packet includes the information about the communication protocol supported by the second device.

The second device supports a communication protocol in a second protocol set. The second protocol set may include one or more communication protocols. The communication protocol may include a wired communication protocol and/or a wireless communication protocol. For example, the second protocol set may include any one or more of communication protocols such as the Wi-Fi protocol, the Bluetooth protocol, the ZigBee protocol, the PLC protocol, the ethernet communication protocol, the USB protocol, and the UWB protocol.

In an embodiment of this application, the communication protocol in the second protocol set may be defined as a second protocol.

In addition, in some embodiments, the communication protocol in the second protocol set may be understood as a communication protocol that may be currently used by the second device. Some communication protocols that can be supported but cannot be currently used temporarily by the second device may not be included in the second protocol set.

In addition, in some embodiments, the protocol information packet may not carry the information about the communication protocol supported by the second device. The second device may use the protocol information packet as a response to the query packet. In this way, the first device determines that the second device can receive the query packet, and then determines that the second device supports the first protocol.

After receiving the protocol information packet, the first device may determine, based on the protocol information packet, the communication protocol supported by the second device.

In addition, in some embodiments, the protocol information packet may further include working status information of the second device. The working status information may be used to reflect a working status of the second device, for example, an endurance capability and a busy degree of the second device.

Content included in the working status information may be set based on an actual requirement. For example, the working status information may include one or more of information such as a power connection status, a remaining battery level percentage, central processing unit (Central Processing Unit, CPU) usage, memory usage, and a communication capability. For example, the working status information may be used to reflect whether the second device is an always-on device (a device that is always connected to external power for power supply), whether usage of a processor computing resource of the second device exceeds a preset threshold, and a busy degree of an air interface communication resource of the second device.

In addition, in some embodiments, after receiving the query packet, the second device may directly return the protocol information packet to the first device. In other words, in these embodiments, after receiving the query packet, any second device may send the protocol information packet to the first device.

In some other embodiments, after receiving the query packet, the second device may first detect whether the second device supports a communication protocol other than the first protocol corresponding to the query packet.

If the second device supports only the first protocol corresponding to the query packet, it indicates that the second device cannot assist the first device in discovering an electronic device that does not support the first protocol. The second device may not respond to the query packet.

If the second device supports the another communication protocol in addition to the first protocol corresponding to the query packet, it indicates that there may be a communication protocol that is in the second protocol set and that is not in the first protocol set. In this case, the second device may assist the first device in discovering an electronic device that does not support the first protocol. Therefore, the second device may respond to the query packet, and send the protocol information packet to the first device.

For example, it is assumed that the second device receives a Bluetooth protocol-based query packet.

In an example, the second device finds that the second device supports only the Bluetooth protocol, and does not support another communication protocol. In this case, the second device may determine that the second device cannot assist the first device in discovering an electronic device that does not support the Bluetooth protocol. Therefore, the second device may not respond to the query packet.

In another example, the second device finds that the second device supports the Bluetooth protocol and the ZigBee protocol. The ZigBee protocol may not belong to the first protocol set. Therefore, the second device may respond to the query packet, return the protocol information packet to the first device, and notify the first device of information that the second device supports the Bluetooth protocol and the ZigBee protocol. In the foregoing self-detection manner of the second device, a quantity of invalid protocol information packets received by the first device can be reduced, to improve processing efficiency of the first device.

In addition, it may be understood that a purpose of broadcasting the query packet by the first device is to search for an auxiliary device, so that the first device performs device discovery by using a discovery capability of the auxiliary device. Therefore, in some embodiments, to improve security of the second device and prevent the first device from randomly invoking a discovery capability of the second device, the second device may detect, after receiving the query packet, whether the first device is a trusted device.

A manner in which the second device determines the trusted device may be set based on an actual requirement. For example, in an example, the second device may determine a paired electronic device as the trusted device. In another example, a user account is logged in to the second device, and the second device may determine, as the trusted device, an electronic device to which the same user account is logged in. In some other examples, the second device may alternatively determine the trusted device in another manner.

When the second device detects that the first device is the trusted device, the second device may respond to the query packet, and return the protocol information packet.

When the second device detects that the first device is not the trusted device, the second device may not respond to the query packet, to prevent the first device from invoking the discovery capability of the second device.

Step S503: The first device determines the auxiliary device from second devices based on the first protocol set and a second protocol set corresponding to each second device, where the second protocol set is a set of communication protocols supported by the second device.

After the first device receives the protocol information packet, the first device may obtain, from the protocol information packet, the information about the communication protocol supported by the second device, to determine the second protocol set corresponding to the second device.

Then, the first device may determine one or more auxiliary devices from second devices based on the first protocol set corresponding to the first device and the second protocol set corresponding to each second device.

A condition for selecting the auxiliary device by the first device may be set based on an actual requirement.

For example, in an example, the first device may determine all the second devices as the auxiliary devices.

In another example, the first device may determine, as the auxiliary device, a second device corresponding to a second protocol set that is not a subset of the first protocol set.

In another example, the first device may separately detect whether the second protocol set corresponding to each second device is a subset of the first protocol set. Then, the first device may determine, as a target protocol set, a second protocol set that is not the subset of the first protocol set, and determine, as the auxiliary device, a second device corresponding to the target protocol set.

If there are at least two second devices that support a same target protocol set, the first device may sequentially compare, based on priorities of various types of working status information, the second devices that support the same target protocol set, reserve a second device with optimal performance as the auxiliary device, remove a second device with poorer performance.

For example, it is assumed that the working status information includes the power connection status and the CPU usage, a priority of the power connection status is higher than that of the CPU usage, a device A and a device B support a same target protocol set, and a device C supports another target protocol set.

In this case, the first device may first compare a power connection status of the device A and a power connection status of the device B. The power connection status may include a power connected state and a power unconnected state, and the power connected state is superior to the power unconnected state.

It is assumed that the power connection status of the device A and the power connection status of the device B are both power connected states, the first device may continue to compare CPU usage of the device A and CPU usage of the device B.

A value of the CPU usage is directly proportional to the busy degree of the second device. It is assumed that the CPU usage of the device A is higher than the CPU usage of the device B, it indicates that the device A is busier and the device B is idler. In this case, the first device may reserve the device B whose CPU usage is lower, and remove the device A whose CPU usage is higher.

After removing the device A with lower performance, the first device may determine the remaining device B and device C as the auxiliary devices.

In some other examples, the first device may alternatively select the auxiliary device in another manner.

Without loss of generality, in some embodiments, the first device may not determine the auxiliary device based on the protocol information packet. The first device may directly determine, as the auxiliary device, the first candidate device discovered by the first device.

A specific manner in which the first device selects the auxiliary device is not limited in embodiments of this application.

Step S504: The first device sends a scan packet to the auxiliary device, where the scan packet indicates the auxiliary device to perform a device discovery operation.

After the first device determines the auxiliary device, the first device may send the scan packet to the auxiliary device. The scan packet indicates the auxiliary device to perform the device discovery operation.

After the auxiliary device receives the scan packet, the auxiliary device may perform the device discovery operation in response to the scan packet, to assist the first device in performing device discovery.

When the auxiliary device performs the device discovery operation, the auxiliary device may listen to a surrounding second protocol-based second packet based on the communication protocol in the second protocol set. Then, the auxiliary device may parse the second packet, and extract, from the second packet, device information of an electronic device that sends the second packet, to discover the electronic device that sends the second packet.

For example, it is assumed that the auxiliary device supports the ZigBee protocol and the Wi-Fi protocol. When performing the device discovery operation, the auxiliary device may listen to a surrounding ZigBee packet based on the ZigBee protocol, and the auxiliary device may listen to a Wi-Fi packet based on the Wi-Fi protocol. When the auxiliary device obtains the ZigBee packet through listening, the auxiliary device may extract, from the ZigBee packet, device information of a ZigBee device that sends the ZigBee packet, and discover, based on the device information, the ZigBee device that sends the ZigBee packet. When the auxiliary device obtains the Wi-Fi packet through listening, the auxiliary device may extract, from the Wi-Fi packet, device information of a Wi-Fi device that sends the Wi-Fi packet, to discover the Wi-Fi device that sends the Wi-Fi packet.

In an embodiment of this application, a device discovered based on the second protocol supported by the auxiliary device and that supports the second protocol is referred to as a "second candidate device". The second candidate device may send the second packet based on the second protocol, and the second packet may be obtained by the auxiliary device through listening. In this way, the second candidate device may be discovered by the auxiliary device.

Then, the auxiliary device may send a device information packet to the first device. The device information packet includes device information of the second candidate device.

Step S505: The first device receives the device information packet sent by the auxiliary device, where the device information packet includes the device information of the second candidate device.

After the first device receives the device information packet sent by the auxiliary device, the first device may parse the device information packet, to obtain the device information of the second candidate device.

The device information of the second candidate device may be device information of a same type as device information of the first candidate device, or may be set based on an actual requirement. For example, the device information may include one or more of information such as a media access control (Media Access Control, MAC) address, an internet protocol address (Internet Protocol Address, IP address), a device type, a communication protocol type, and a device name.

Step S506: The first device displays the device information of the first candidate device and the device information of the second candidate device.

After the first device obtains the device information of the first candidate device and the device information of the second candidate device, the first device may display the device information of the first candidate device and the device information of the second candidate device.

In this case, the user may view the device information of the first candidate device and the device information of the second candidate device that are displayed by the first device, to learn of an electronic device that exists around.

According to the foregoing communication method, the first device can discover, by using the discovery capability of the auxiliary device, the electronic device that supports the second protocol. Therefore, the first device can discover some electronic devices that do not support the first protocol, to improve user experience. This achieves high ease-of-use and practicability.

After the user views the device information of the first candidate device and the device information of the second candidate device that are displayed by the first device, if there is no electronic device that the user wants to use in the first candidate device and the second candidate device, the user may end a current communication procedure.

If there is an electronic device that the user wants to use in the first candidate device and the second candidate device, the user may perform a device selection operation on the first device, to select, from the first candidate device and the second candidate device, a target device to which the user wants to connect.

A form of the device selection operation may be set based on an actual requirement. For example, the device selection operation may include one or more of operations such as a tapping operation, a touching and holding operation, a sliding operation, and a knocking operation that are performed on the display of the first device.

After the first device detects the device selection operation, the first device may continue to perform subsequent step S507 to step S509.

Step S507: The first device determines the target device in response to the device selection operation of the user. The first device performs step S508 if the target device is the first candidate device. The first device performs step S509 if the target device is not the first candidate device.

The first device may determine, in response to the device selection operation of the user, the target device to which the user wants to connect.

The target device may be the first candidate device discovered by the first device based on the first protocol, or the target device may be the second candidate device discovered by the second device based on the second protocol.

The first device may perform step S508 when the target device is the first candidate device.

The first device may perform step S509 when the target device is not the first candidate device.

In some other embodiments, the first device may alternatively determine whether the target device is the second candidate device. The first device may perform step S508 when the target device is not the second candidate device. The first device may perform step S509 when the target device is the second candidate device.

In some other embodiments, the first device may alternatively determine whether the target device is the first candidate device, and the first device may determine whether the target device is the second candidate device. The first device may perform step S508 when the target device is the first candidate device. The first device may perform step S509 when the target device is the second candidate device and the target device is not the first candidate device.

In some other embodiments, the first device may alternatively determine, based on another determining condition, to perform step S508 or step S509. Specific content of the determining condition is not limited in embodiments of this application.

Step S508: The first device establishes a connection to the target device.

When the target device is the first candidate device discovered by the first device, the first device may directly establish the connection to the target device, and perform data exchange with the target device based on the connection. For example, the first device may establish, based on the first protocol, the connection to and perform data exchange with the target device.

Step S509: The first device determines, as a transit device, the auxiliary device that discovers the target device, establishes a connection to the transit device, and indicates the transit device to establish a connection to the target device.

When the target device is not the first candidate device, the first device may determine, as the transit device, the auxiliary device that discovers the target device, establishes the connection to the transit device, and indicates the transit device to establish the connection to the target device. For example, the first device may send (for example, based on the first protocol) a first connection request to the transit device. The first connection request indicates the transit device to establish the connection (for example, establish a second protocol-based connection) to the target device. After receiving the first connection request, the transit device performs, in response to the indication packet, a procedure of establishing the connection to the target device.

After the transit device establishes the connection to the target device, the first device may perform data exchange with the target device based on the transit device.

For example, when the first device needs to send an operation instruction to the target device, the first device may send (for example, based on the first protocol) the operation instruction to the transit device, and the transit device forwards (for example, based on the second protocol) the operation instruction to the target device.

When the target device needs to send service data to the first device, the target device may send (for example, based on the second protocol) the service data to the transit device, and the transit device forwards (for example, based on the first protocol) the service data to the first device.

According to the foregoing method, the first device can communicate, by using the auxiliary device, with the electronic device that supports the second protocol (which may be the communication protocol that is not supported by the first device, or may be the communication protocol that cannot be used by the first device temporarily), and control the electronic device that supports the second protocol. In this way, the first device can control more types of electronic devices. Therefore, the communication method provided in embodiments of this application effectively improves user experience, and has high ease-of-use and practicability.

Particularly, in some scenarios, the first device may alternatively extend, by using the foregoing communication method, a distance at which the first device can discover a device. It may be understood that a protocol like the Wi-Fi protocol or the Bluetooth protocol is usually a near field communication protocol (which is not specifically an NFC protocol herein, but is a general term). When a distance between two devices exceeds a specific radius range, discovery based on the near field communication protocol cannot be performed. Therefore, according to the communication method provided in embodiments of this application, the first device can discover a device beyond a signal radius range of the communication protocol supported by the first device.

For example, it is assumed that the first device, an auxiliary device, and a target device all support a same first protocol, the first device is far away from the target device, the first device cannot discover the target device, and the auxiliary device can discover the target device.

In this case, the first device may use the auxiliary device as a transit device, establish a connection to the transit device, and indicate the transit device to establish a connection to the target device.

Subsequently, when the first device needs to send an operation instruction to the target device, the first device may send the operation instruction to the transit device based on the first protocol, and the transit device forwards the operation instruction to the target device based on the same first protocol.

When the target device needs to send service data to the first device, the target device may send the service data to the transit device based on the first protocol, and the transit device forwards the service data to the first device based on the same first protocol.

In addition, in some embodiments, after the auxiliary device receives the scan packet, the auxiliary device may further determine the auxiliary device as a next-level first device, perform a procedure of step S501 to step S505, develop a next-level auxiliary device, and perform device discovery by using a discovery capability of another electronic device.

By analogy, an auxiliary device at each level may determine the auxiliary device at each level as a first device at a new level, and continue to develop an auxiliary device at a next level until there is no electronic device around that meets a condition for filtering the auxiliary device.

According to the foregoing method for developing the auxiliary devices level by level, the first device can make full use of a discovery capability of each electronic device in an environment. In this way, the first device can discover more electronic devices that support different communication protocols, to improve user experience.

In addition, in a process of implementing the foregoing solution of developing the auxiliary devices level by level, there may be a case in which a plurality of electronic devices are auxiliary devices of each other.

For example, it is assumed that a communication system includes a device A, a device B, and a device C. The device A supports the Wi-Fi protocol, the Bluetooth protocol, and the near field communication (Near Field Communication, NFC) protocol. The device B supports the ZigBee protocol and the Wi-Fi protocol. The device C supports the Wi-Fi protocol and the Bluetooth protocol.

The device B includes a communication protocol (the ZigBee protocol) that is not supported by the device A. The device C includes a communication protocol (the Bluetooth protocol) that is not supported by the device B. The device A includes a communication protocol (the NFC protocol) that is not supported by the device C.

Therefore, in some scenarios, there may be a scenario in which the device A determines the device B as the auxiliary device, the device B determines the device C as the auxiliary device, and the device C determines the device A as the auxiliary device.

In these scenarios, a piece of same device information may be repeatedly transmitted, wasting a large quantity of communication resources. For example, the device A may transmit the device information to the device C, the device C may transmit the device information to the device B, and the device B transmit the information to the device A.

Therefore, to avoid the foregoing scenario in which the plurality of electronic devices are the auxiliary devices of each other, in some embodiments, the first device and the auxiliary device may not respond to subsequently received query packets.

For example, with reference to the communication system shown in the foregoing example, after the device A determines the device B as the auxiliary device, the device B broadcasts the query packet to the outside to search for the next-level auxiliary device.

In this case, the device A is the first device, the device A may not respond to the query packet broadcast by the device B, and the device C may respond to the query packet broadcast by the device B. After the device B determines the device C as the auxiliary device, the device C broadcasts the query packet to the outside to search for a next-level auxiliary device.

In this case, because the device A is the first device, and the device B is the auxiliary device of the device A, neither the device A nor the device B may respond to the query packet of the device C.

Subsequently, if the device C cannot receive a protocol information packet fed back by another electronic device, the device C may stop developing a next-level auxiliary device.

So far, the device A is the first device, the device B is the auxiliary device of the device A, the device C is the auxiliary device of the device B, and the device C has no lower-level auxiliary device.

According to the foregoing method, the case in which the plurality of electronic devices are the auxiliary devices of each other can be avoided, to effectively reduce a to-be-wasted communication resource.

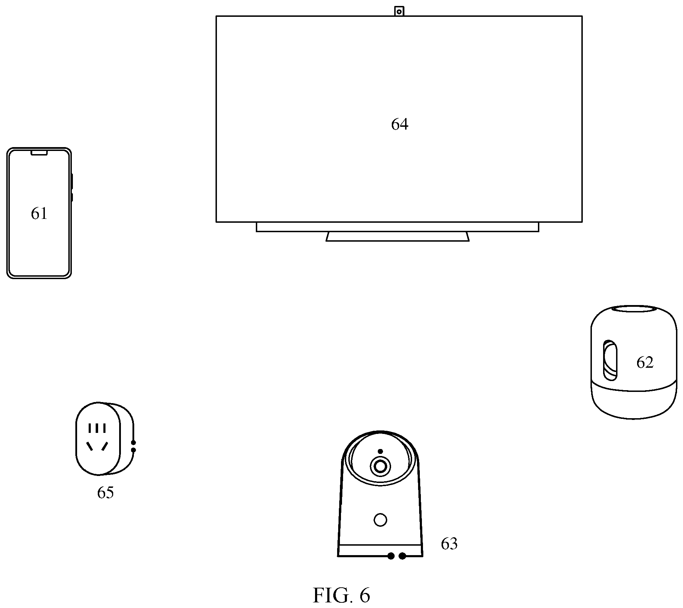

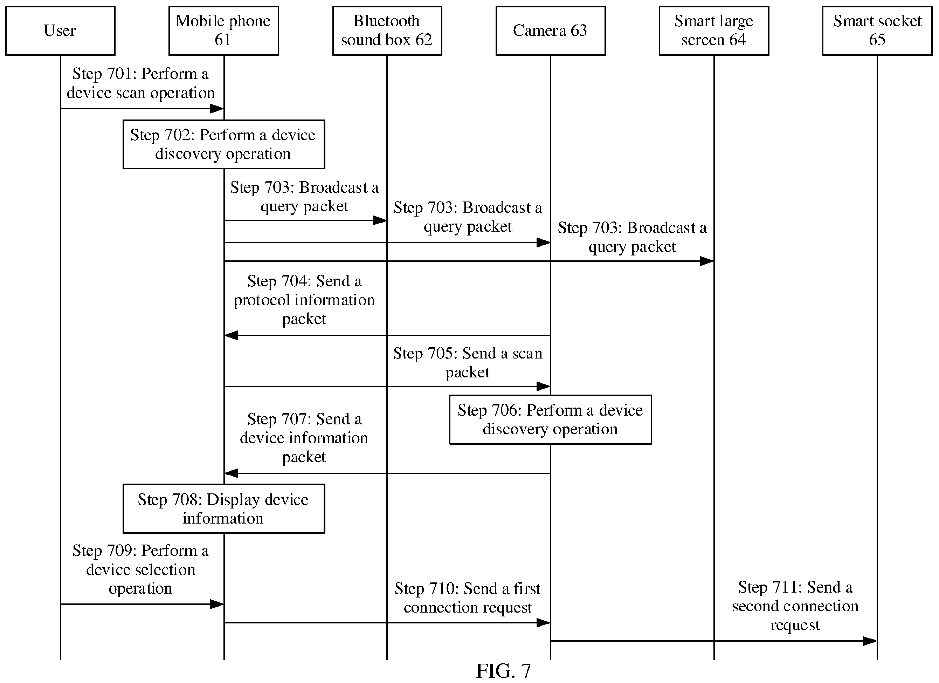

With reference to the descriptions of the foregoing embodiments and a communication system shown in FIG. 6, an embodiment of this application provides another communication method. As shown in FIG. 7, the communication method includes the following steps.

Step 701: A user performs a device scan operation on a mobile phone 61.

As shown in FIG. 6, the communication system in this embodiment may include the mobile phone 61, a Bluetooth sound box 62, a camera 63, a smart large screen 64, and a smart socket 65.

The mobile phone 61 supports a Bluetooth protocol and a Wi-Fi protocol. The Bluetooth sound box 62 supports the Bluetooth protocol. The camera 63 supports the Wi-Fi protocol and a ZigBee protocol. The smart large screen 64 supports the Wi-Fi protocol. The smart socket 65 supports the ZigBee protocol.

The mobile phone 61 is an electronic device that is being used by the user, and may be understood as the foregoing first device.

The user may perform the device scan operation on the mobile phone 61 when the user wants to use the mobile phone 61 to discover a surrounding electronic device. The device scan operation may include one or more of operations such as a tapping operation, a touching and holding operation, a sliding operation, and a knocking operation.

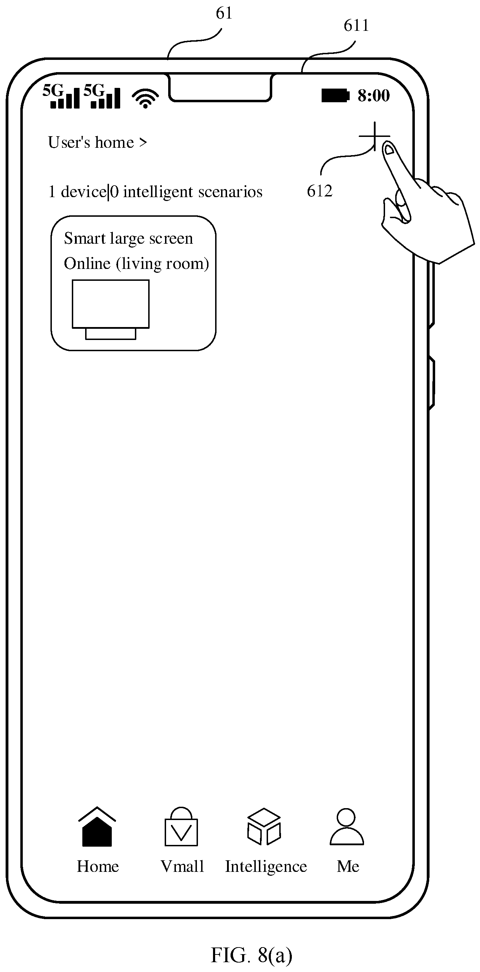

For example, as shown in a scenario in FIG. 8(a), it is assumed that an "AI life" application is installed on the mobile phone 61. When the user wants to use the mobile phone 61 to discover the surrounding electronic device, the user may start the "AI life" application, and enter a device management interface 611. The device management interface 611 includes an addition control 612.

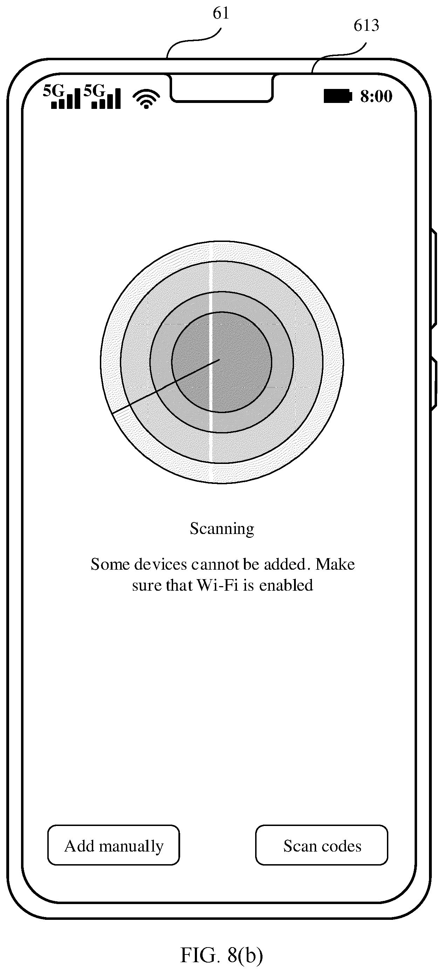

In some embodiments, in response to an operation of tapping the addition control 612 by the user, the mobile phone 61 may display a user interface 613 shown in a scenario in FIG. 8(b). In some embodiments, in response to an operation of tapping the addition control 612 by the user, the mobile phone 61 performs a device discovery operation (step 702). In some embodiments, in response to an operation of tapping the addition control 612 by the user, the mobile phone may first display a user interface 613 shown in a scenario in FIG. 8(b), and then the mobile phone performs a device discovery operation in response to an operation of tapping a control on the user interface 613 by the user (step 702).

The user interface 613 may prompt the user that the mobile phone 61 is currently performing the device discovery operation. In addition, in some embodiments, the user interface 613 may further provide an "Add manually" control and a "Scan codes" control. In this way, when the mobile phone 61 does not discover a target device, the user may add the target device in an "Add manually" or "Scan codes" manner.

Step 702: The mobile phone 61 performs the device discovery operation.

After the user performs the device scan operation on the mobile phone 61, the mobile phone 61 may perform a device discovery operation based on the Bluetooth protocol supported by the mobile phone 61, and perform a device discovery operation based on the Wi-Fi protocol supported by the mobile phone 61, to listen to a surrounding Bluetooth packet and a surrounding Wi-Fi packet. The mobile phone 61 may perform, at the same time or in sequence, the device discovery operation based on the Bluetooth protocol and the device discovery operation based on the Wi-Fi protocol.

The Bluetooth sound box 62 in the foregoing communication system supports the Bluetooth protocol. Therefore, the Bluetooth sound box 62 may send (for example, broadcast) a Bluetooth packet to the outside in a working process. When the mobile phone 61 obtains, through listening, the Bluetooth packet sent by the Bluetooth sound box 62, the mobile phone 61 may parse the Bluetooth packet to obtain device information of the Bluetooth sound box 62, and discover the Bluetooth sound box 62.

The camera 63 and the smart large screen 64 support the Wi-Fi protocol. Therefore, the camera 63/the smart large screen 64 may send a Wi-Fi packet to the outside in a working process. When the mobile phone 61 obtains, through listening, the Wi-Fi packet sent by the camera 63, the mobile phone 61 may parse the Wi-Fi packet to obtain device information of the camera 63, and discover the camera 63. When the mobile phone 61 obtains, through listening, the Wi-Fi packet sent by the smart large screen 64, the mobile phone 61 may parse the Wi-Fi packet to obtain device information of the smart large screen 64, and discover the smart large screen 64.

Content of the device information may be set based on an actual requirement. For example, the device information may include one or more of information such as a device name, a MAC address, an IP address, a device type, and a communication protocol type.

In an embodiment of this application, electronic devices (namely, the Bluetooth sound box 62, the camera 63, and the smart large screen 64) discovered by the mobile phone 61 may be determined as first candidate devices.

Step 703: The mobile phone 61 broadcasts a query packet.

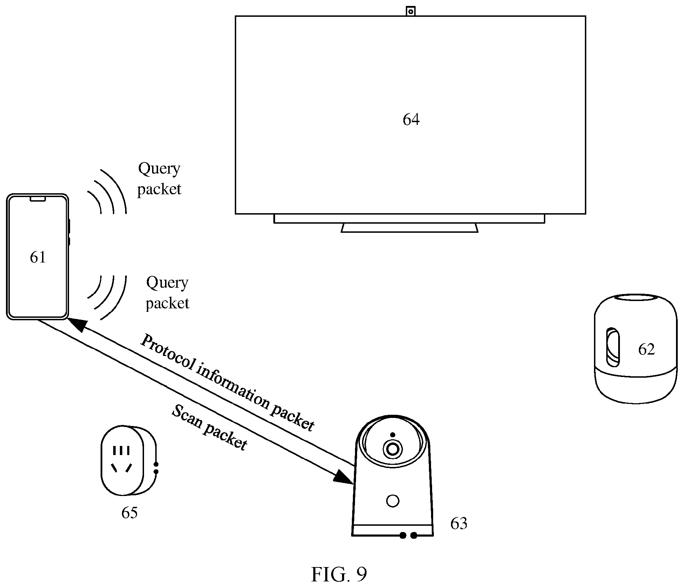

As shown in FIG. 9, in addition to performing the device discovery operations based on the Bluetooth protocol and the Wi-Fi protocol that are supported by the mobile phone 61, the mobile phone 61 may further broadcast query packets based on the Bluetooth protocol and the Wi-Fi protocol that are supported by the mobile phone 61.

The query packet is used to request a second device that receives the query packet to return information about a communication protocol supported by the second device.

Step 704: The camera 63 sends a protocol information packet to the mobile phone 61.

In the foregoing communication system, the Bluetooth sound box 62 supports the Bluetooth protocol, and the camera 63 and the smart large screen 64 support the Wi-Fi protocol. Therefore, the Bluetooth sound box 62 may receive a Bluetooth protocol-based query packet, and the camera 63 and the smart large screen 64 may receive a Wi-Fi protocol-based query packet.

The smart socket 65 does not support the Bluetooth protocol or the Wi-Fi protocol. Therefore, the smart socket 65 cannot receive the query packet.

After receiving the Bluetooth protocol-based query packet, the Bluetooth sound box 62 may detect a communication protocol supported by the Bluetooth sound box 62. In some embodiments, the Bluetooth sound box 62 detects that the Bluetooth sound box 62 supports only the Bluetooth protocol and does not support another communication protocol. Therefore, the Bluetooth sound box 62 may not respond to the query packet.

After the smart large screen 64 and the camera 63 receive the Wi-Fi protocol-based query packet, the smart large screen 64 and the camera 63 may detect a communication protocol supported by the smart large screen 64 and the camera 63. In some embodiments, the smart large screen 64 detects that the smart large screen 64 supports only the Wi-Fi protocol and does not support another communication protocol. Therefore, the smart large screen 64 may not respond to the query packet.

The camera 63 detects that the camera 63 supports the ZigBee protocol in addition to the Wi-Fi protocol. Therefore, the camera 63 may send the protocol information packet to the mobile phone 61. The protocol information packet includes information about the Wi-Fi protocol and the ZigBee protocol that are supported by the camera 63. In some other implementations, the protocol information packet includes information about a protocol supported by the camera 63 other than a protocol (the Wi-Fi protocol) on which the query packet received by the camera is based, namely, information about the ZigBee protocol.

The Bluetooth sound box 62, the camera 63, and the smart large screen 64 may be understood as the foregoing second devices.

Step 705: The mobile phone 61 sends a scan packet to the camera 63.

After receiving the protocol information packet sent by the camera 63, the mobile phone 61 may determine, based on the protocol information packet, that the camera 63 supports the Wi-Fi protocol and the ZigBee protocol.

In this case, the mobile phone 61 may determine, based on a first protocol set [Wi-Fi protocol, Bluetooth protocol] supported by the mobile phone 61 and a second protocol set [Wi-Fi protocol, ZigBee protocol] supported by the camera 63, whether the camera 63 can become an auxiliary device.

A condition for selecting the auxiliary device by the mobile phone 61 may be set based on an actual requirement.

For example, in an example, the mobile phone 61 may directly determine the camera 63 as the auxiliary device. Specifically, for example, the mobile phone 61 directly determines the camera 63 as the auxiliary device in response to returning the protocol information packet by the camera 63.

In another example, the mobile phone 61 may determine whether the second protocol set is a subset of the first protocol set. If the second protocol set is the subset of the first protocol set, the mobile phone 61 may determine the camera 63 as a non-auxiliary device (or the mobile phone 61 does not determine the camera 63 as the auxiliary device). If the second protocol set is not the subset of the first protocol set, the mobile phone 61 may determine the camera 63 as the auxiliary device.

Specifically, the mobile phone 61 may obtain an intersection set of the first protocol set [Wi-Fi protocol, Bluetooth protocol] and the second protocol set [Wi-Fi protocol, ZigBee protocol], to obtain a first intersection set [Wi-Fi protocol].

Then, the mobile phone 61 may subtract the first intersection set from the second protocol set, to obtain a fourth protocol set [ZigBee protocol].

The fourth protocol set is not an empty set, it indicates that the second protocol set is not the subset of the first protocol set. Therefore, the mobile phone 61 may determine the camera 63 as the auxiliary device.

In some other examples, the mobile phone 61 may alternatively select the auxiliary device by using another condition.

After the mobile phone 61 determines the camera 63 as the auxiliary device, the mobile phone 61 may send the scan packet to the camera 63. The scan packet indicates the camera 63 to perform a device scan operation.

Step 706: The camera 63 performs the device discovery operation.

After the camera 63 receives the scan packet, the camera 63 may perform device discovery operations based on the Wi-Fi protocol and the ZigBee protocol that are supported by the camera 63, and listen to a surrounding Wi-Fi packet and a surrounding ZigBee packet.

In the foregoing communication system, the mobile phone 61 and the smart large screen 64 support the Wi-Fi protocol, and the smart socket 65 supports the ZigBee protocol. Therefore, when the camera 63 obtains, through listening, a Wi-Fi packet sent by the mobile phone 61, the camera 63 may parse the Wi-Fi packet to obtain device information of the mobile phone 61, and discover the mobile phone 61. When the camera 63 obtains, through listening, the Wi-Fi packet sent by the smart large screen 64, the camera 63 may parse the Wi-Fi packet to obtain device information of the smart large screen 64, and discover the smart large screen 64. When the camera 63 obtains, through listening, a ZigBee packet sent by the smart socket 65, the camera 63 may parse the ZigBee packet to obtain device information of the smart socket 65, and discover the smart socket 65.

In this embodiment of this application, the mobile phone 61 is the first device. Therefore, the camera 63 can determine, as second candidate devices, electronic devices (namely, the smart large screen 64 and the smart socket 65) other than the first device (namely, the mobile phone 61) that are discovered by the camera 63. In this way, the mobile phone 61 can be prevented from mistakenly considering the mobile phone 61 as the second candidate device.

Step 707: The camera 63 sends a device information packet to the mobile phone 61.

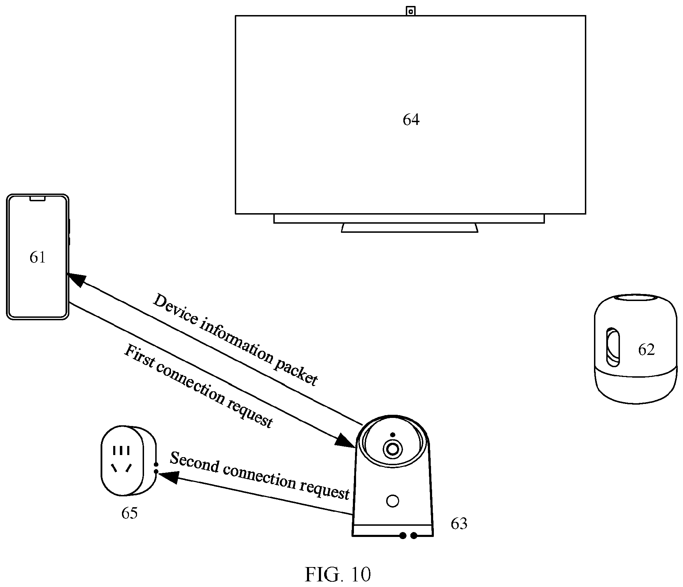

As shown in FIG. 10, after the camera 63 performs the device discovery operation, the camera 63 may send the device information packet to the mobile phone 61. The device information packet carries device information of the second candidate devices discovered by the camera 63, including the device information of the smart large screen 64 and the device information of the smart socket 65.

Step 708: The mobile phone 61 displays the device information.

After the mobile phone 61 obtains the device information packet, the mobile phone 61 may obtain the device information of the second candidate device from the device information packet.

Then, the mobile phone 61 may display, to the user, device information of the first candidate devices and the device information of the second candidate device.

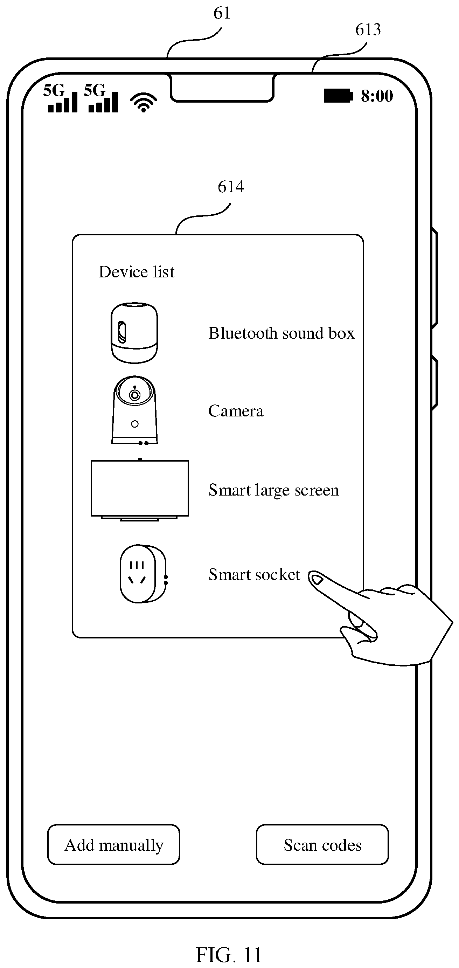

For example, as shown in FIG. 11, after receiving the device information packet, the mobile phone 61 may display a device list 614 on a device discovery interface 613, and display, in the device list 614, the "Bluetooth sound box", the "Camera", and the "Smart large screen" (the device information of the first candidate devices) that are discovered by the mobile phone 61, and the "Smart socket" (the device information of the second candidate device) discovered by the camera 63.

In some embodiments, the mobile phone 61 may display the device information of the first candidate device and the device information of the second candidate device at the same time. In some other embodiments, compared with the obtained device information of the second candidate device, the device information of the first candidate device may be obtained by the mobile phone 61 more quickly. Therefore, the mobile phone may first display the device information of the first candidate device, and then add and display the device information of the second candidate device after subsequently obtaining the device information of the second candidate device.

In some embodiments, the mobile phone 61 may display the device information of the first candidate device and the device information of the second candidate device by using different types of display effects/icons/names, or the like. In this way, the user can know which devices are directly discovered by the mobile phone 61 and which devices are indirectly discovered by the mobile phone 61 in the device list. Certainly, the mobile phone may alternatively display the first candidate device and the second candidate device in a same manner, to implement of discovery of more devices, without being perceived by the user.

Step 709: The user performs a device selection operation on the mobile phone 61.

After the user views the device information displayed by the mobile phone 61, if electronic devices corresponding to the device information do not include an electronic device that the user wants to use, the user may end a current communication procedure.

If electronic devices corresponding to the device information include an electronic device that the user wants to use, the user may perform the device selection operation on the mobile phone 61, to select a target device from the electronic devices corresponding to the device information.

Step 710: The mobile phone 61 sends a first connection request to the camera 63.

After the user performs the device selection operation, the mobile phone 61 may determine the target device in response to the device selection operation.

For example, it is assumed that the user performs a device selection operation on an option of the "Smart socket" in the device list 614. In this case, the mobile phone 61 may determine the smart socket 65 as the target device. The smart socket 65 is discovered by the camera 63, and does not belong to the first candidate device. Therefore, the mobile phone 61 may determine, as a transit device, the camera 63 that discovers the smart socket 65, and send the first connection request to the camera 63.

The first connection request is used to trigger the mobile phone 61 to establish a connection to the camera 63, and the first connection indicates the camera 63 to establish a connection to the smart socket 65.

The first connection request may include a device identifier of the target device (namely, the smart socket 65). The device identifier may include any one or more of information such as a device name, a MAC address, and an IP address of the target device.

In some embodiments, the first connection request may further include a type of a communication protocol supported by the target device. For example, the first connection request may further carry information indicating that the smart socket 65 supports the ZigBee protocol.

For example, the camera 63 receives the first connection request, and establishes the connection to the mobile phone 61 in response to the first connection request. In addition, the camera 63 may send, based on the ZigBee protocol, a second connection request to the smart socket 65 based on a device identifier of the smart socket 65 and the information indicating that the smart socket 65 supports the ZigBee protocol that are carried in the first connection request (step 711).

Step 711: The camera 63 sends the second connection request to the smart socket 65.

After the camera 63 receives the first connection request, the camera 63 may establish a Wi-Fi connection to the mobile phone 61, and the camera 63 may send the second connection request to the smart socket 65.

The second connection request is used to trigger the camera 63 to establish the connection to the smart socket 65. After the smart socket 65 receives the second connection request, the smart socket 65 may establish a ZigBee connection to the camera 63 in response to the second connection request.

Subsequently, the mobile phone 61 may perform data exchange with the smart socket 65 based on the camera 63. In other words, the camera 63 is used as the transit device for data exchange between the mobile phone 61 and the smart socket 65.

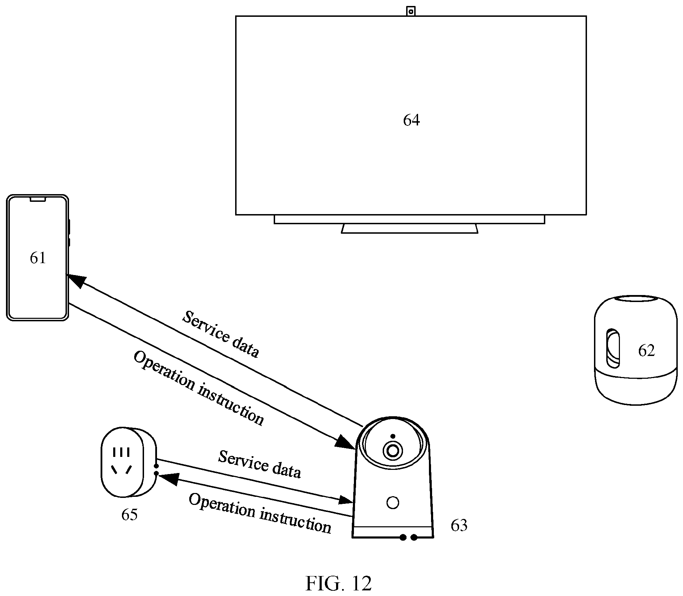

As shown in FIG. 12, when the mobile phone 61 needs to send an operation instruction to the smart socket 65, the mobile phone 61 may send the operation instruction to the camera 63 based on the Wi-Fi connection, and indicate the camera 63 to forward the operation instruction to the smart socket 65. After receiving the operation instruction, the camera 63 may forward the operation instruction to the smart socket 65 based on the ZigBee connection. In this process, the camera 63 may convert the received Wi-Fi protocol-based operation instruction into a ZigBee protocol-based operation instruction, and then send the ZigBee protocol-based operation instruction to the smart socket 65. The conversion process may be completed in a protocol conversion manner preset in the camera 63.

When the smart socket 65 needs to send service data to the mobile phone 61, the smart socket 65 may send the service data to the camera 63 based on the ZigBee connection, and indicate the camera 63 to forward the service data to the mobile phone 61. After receiving the service data, the camera 63 may forward the service data to the mobile phone 61 based on the Wi-Fi connection. In this process, the camera 63 may convert the received ZigBee-based service data into Wi-Fi protocol-based service data, and then send the Wi-Fi protocol-based service data to the mobile phone 61. The conversion process may be completed in a protocol conversion manner preset in the camera 63.

In addition, in some embodiments, to ensure real-time performance of device information of a discoverable surrounding device of the second candidate device, the camera 63 (namely, the auxiliary device) may cyclically perform step 706 and step 707 based on a preset update cycle.

A cycle length of the update cycle may be set based on an actual requirement. For example, the cycle length of the update cycle may be set to 1 second, 5 seconds, or 10 seconds. The cycle length of the update cycle is not limited in embodiments of this application.

At the beginning of each update cycle, the auxiliary device may clear previously recorded device information, and re-record and re-send device information of a second candidate device discovered in the current update cycle. This ensures real-time performance of the device information of the second candidate device, and avoids accumulation, in the auxiliary device, of a large amount of device information of electronic devices that are discovered.

It can be learned from the content of the foregoing embodiment that, in the communication method provided in this embodiment, when the first device detects the device scan operation, the first device can perform a device discovery operation based on a first protocol supported by the first device. The first device can determine the auxiliary device from surrounding electronic devices that support the first protocol. The auxiliary device supports at least one first protocol. The auxiliary device supports a communication protocol other than the at least one first protocol.

Then, the first device can discover, by using a discovery capability of the auxiliary device, some electronic devices (for example, the smart socket 65 in the foregoing embodiment) that do not support the first protocol. In this way, the first device can communicate with the electronic devices that do not support the first protocol, to improve user experience.

In addition, the auxiliary device can cyclically update the device information of the second candidate device, and clear expired device information. This ensures timeliness of the device information of the second candidate device, and avoids accumulation of the large amount of device information in the auxiliary device.

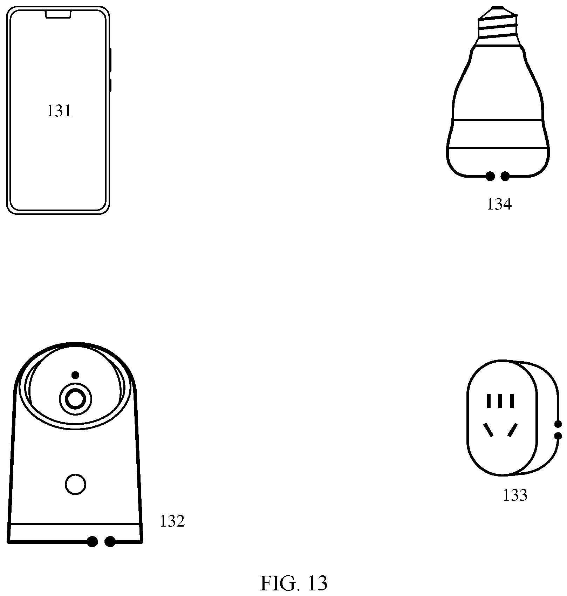

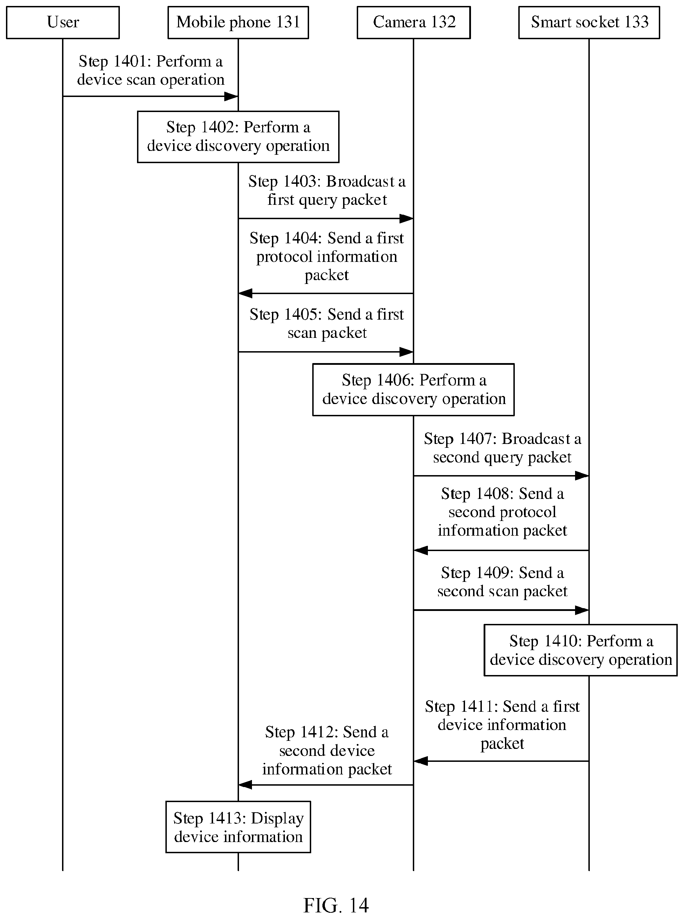

With reference to the descriptions of the foregoing embodiments and a communication system shown in FIG. 13, an embodiment of this application provides another communication method. As shown in FIG. 14, the communication method includes the following steps.

Step 1401: A user performs a device scan operation on a mobile phone.

As shown in FIG. 13, the communication system in this embodiment may include the mobile phone 131, a camera 132, a smart socket 133, and a smart lamp 134.

The mobile phone 131 supports a Bluetooth protocol and a Wi-Fi protocol. The camera 132 supports the Wi-Fi protocol and a ZigBee protocol. The smart socket 133 supports the ZigBee protocol and a PLC protocol. The smart lamp 134 supports the PLC protocol.

The mobile phone 131 is an electronic device that is being used by the user, and may be understood as the foregoing first device.

The user may perform the device scan operation on the mobile phone 131 when the user wants to use the mobile phone 131 to discover a surrounding electronic device. The device scan operation may include one or more of operations such as a tapping operation, a touching and holding operation, a sliding operation, and a knocking operation.

Step 1402: The mobile phone 131 performs a device discovery operation.

After the user performs the device scan operation on the mobile phone 131, the mobile phone 131 may perform device discovery based on the Bluetooth protocol and the Wi-Fi protocol that are supported by the mobile phone 131, and listen to a surrounding Bluetooth packet and a surrounding Wi-Fi packet.

In the foregoing communication system, the camera 132 supports the Wi-Fi protocol. Therefore, in a working process of the camera 132, the camera 132 may send a Wi-Fi packet to the outside. When the mobile phone 131 obtains, through listening, the Wi-Fi packet sent by the camera 132, the mobile phone 131 may parse the Wi-Fi packet to obtain device information of the camera 132, and discover the camera 132.

Content of the device information may be set based on an actual requirement. For example, the device information may include one or more of information such as a device name, a MAC address, an IP address, and a device type.

Step 1403: The mobile phone 131 broadcasts a first query packet.

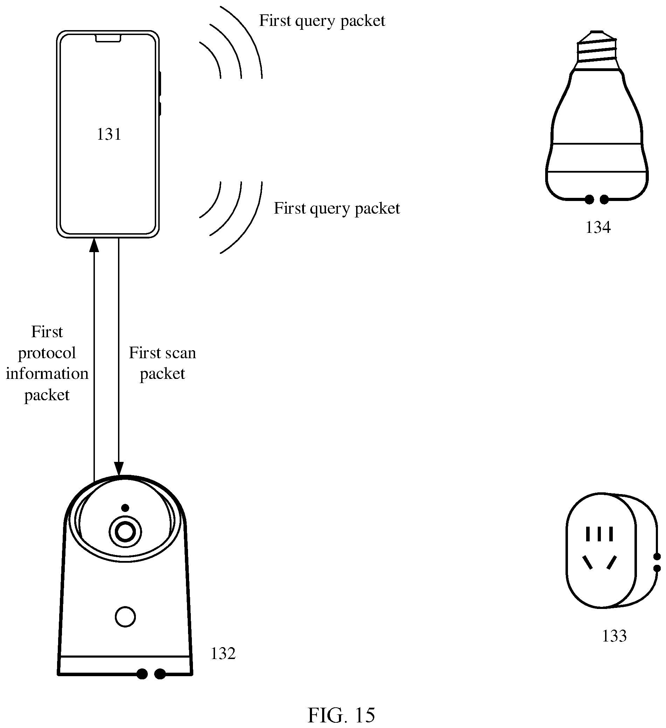

As shown in FIG. 15, in addition to performing the device discovery operations based on the Bluetooth protocol and the Wi-Fi protocol that are supported by the mobile phone 131, the mobile phone 131 may further broadcast first query packets based on the Bluetooth protocol and the Wi-Fi protocol that are supported by the mobile phone 131. The first query packet is used to request an electronic device that receives the first query packet to return information about a communication protocol supported by the electronic device.

Step 1404: The camera 132 sends a first protocol information packet to the mobile phone 131.

In the foregoing communication system, the camera 132 supports the Wi-Fi protocol. Therefore, the camera 132 may receive a Wi-Fi protocol-based first query packet.

The smart socket 133 and the smart lamp 134 do not support the Bluetooth protocol and the Wi-Fi protocol. Therefore, the smart socket 133 and the smart lamp 134 cannot receive the first query packet.

After receiving the first query packet, the camera 132 detects that the camera 132 further supports the ZigBee protocol in addition to the Wi-Fi protocol. Therefore, the camera 132 may send the first protocol information packet to the mobile phone 131. The first protocol information packet includes information about the Wi-Fi protocol and the ZigBee protocol that are supported by the camera 132.

The camera 132 may be understood as a second device.

Step 1405: The mobile phone 131 sends a first scan packet to the camera 132.

After receiving the first protocol information packet sent by the camera 132, the mobile phone 131 may determine, based on the first protocol information packet, that the camera 132 supports the Wi-Fi protocol and the ZigBee protocol.

The ZigBee protocol does not belong to a communication protocol supported by the mobile phone 131. Therefore, the mobile phone 131 may determine the camera 132 as an auxiliary device, and send the first scan packet to the camera 132.

The first scan packet indicates the camera 132 to perform a device discovery operation.

Step 1406: The camera 132 performs the device discovery operation.

After the camera 132 receives the first scan packet, the camera 132 may perform device discovery operations based on the Wi-Fi protocol and the ZigBee protocol that are supported by the camera 132, and listen to a surrounding Wi-Fi packet and a surrounding ZigBee packet.

The mobile phone 131 in the foregoing communication system supports the Wi-Fi protocol. Therefore, the mobile phone 131 may send a Wi-Fi packet to the outside in a working process. Therefore, when the camera 132 obtains, through listening, the Wi-Fi packet sent by the mobile phone 131, the camera 132 may parse the Wi-Fi packet to obtain device information of the mobile phone 131, and discover the mobile phone 131.

The smart socket 133 supports the ZigBee protocol. Therefore, the smart socket 133 may send a ZigBee packet to the outside in a working process. When the camera 132 obtains, through listening, the ZigBee packet sent by the smart socket 133, the camera 132 may parse the ZigBee packet to obtain device information of the smart socket 133, and discover the smart socket 133.

Step 1407: The camera 132 broadcasts a second query packet.

In this embodiment, after the camera 132 becomes the auxiliary device, in addition to performing device discovery by using a discovery capability of the camera 132, the camera 132 may further develop a next-level auxiliary device, and perform device discovery by using a discovery capability of another electronic device.

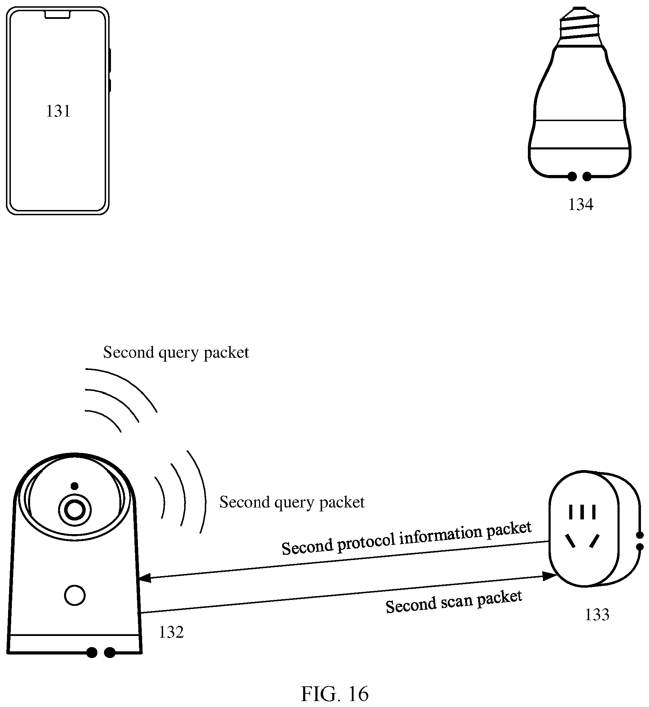

As shown in FIG. 16, when the camera 132 develops the next-level auxiliary device, the camera 132 may broadcast second query packets based on the Wi-Fi protocol and the ZigBee protocol that are supported by the camera 132.

The second query packet is used to request an electronic device that receives the second query packet to return information about a communication protocol supported by the electronic device.

Step 1408: The smart socket 133 sends a second protocol information packet to the camera 132.

In the foregoing communication system, the mobile phone 131 supports the Wi-Fi protocol. Therefore, the mobile phone 131 may receive a Wi-Fi protocol-based second query packet.

The smart socket 133 supports the ZigBee protocol. Therefore, the smart socket 133 may receive a ZigBee protocol-based second query packet.

The smart lamp 134 does not support the Wi-Fi protocol and the ZigBee protocol. Therefore, the smart lamp 134 cannot receive the second query packet.

After receiving the second query packet, the mobile phone 131 detects that the mobile phone 131 is the first device. Therefore, the mobile phone 131 may not respond to the second query packet. This can avoid a case in which a plurality of electronic devices are auxiliary devices of each other, and reduce a to-be-wasted communication resource.

After receiving the second query packet, the smart socket 133 detects that the smart socket 133 further supports the PLC protocol in addition to the ZigBee protocol. Therefore, the smart socket 133 may send the second protocol information packet to the camera 132. The second protocol information packet includes information about the ZigBee protocol and the PLC protocol that are supported by the smart socket 133.

Step 1409: The camera 132 sends a second scan packet to the smart socket 133.

After receiving the second protocol information packet sent by the smart socket 133, the camera 132 may determine, based on the second protocol information packet, that the smart socket 133 supports the ZigBee protocol and the PLC protocol.

The PLC protocol does not belong to a communication protocol supported by the camera 132. Therefore, the camera 132 may determine the smart socket 133 as the next-level auxiliary device, and send the second scan packet (namely, the foregoing auxiliary scan packet) to the smart socket 133.

The second scan packet indicates the smart socket 133 to perform a device discovery operation.

Step 1410: The smart socket 133 performs the device discovery operation.

After the smart socket 133 receives the second scan packet, the smart socket 133 may perform device discovery operations based on the ZigBee protocol and the PLC protocol that are supported by the smart socket 133.

In the foregoing communication system, the camera 132 supports the ZigBee protocol, and the smart lamp 134 supports the PLC protocol. Therefore, the smart socket 133 may discover the ZigBee packet sent by the camera 132, and obtain, through listening, a PLC packet sent by the smart lamp 134.

Then, the smart socket 133 may parse the ZigBee packet to obtain the device information of the camera 132, and discover the camera 132. The smart socket 133 may parse the PLC packet to obtain device information of the smart lamp 134, and discover the smart lamp 134.

Step 1411: The smart socket 133 sends a first device information packet to the camera 132.

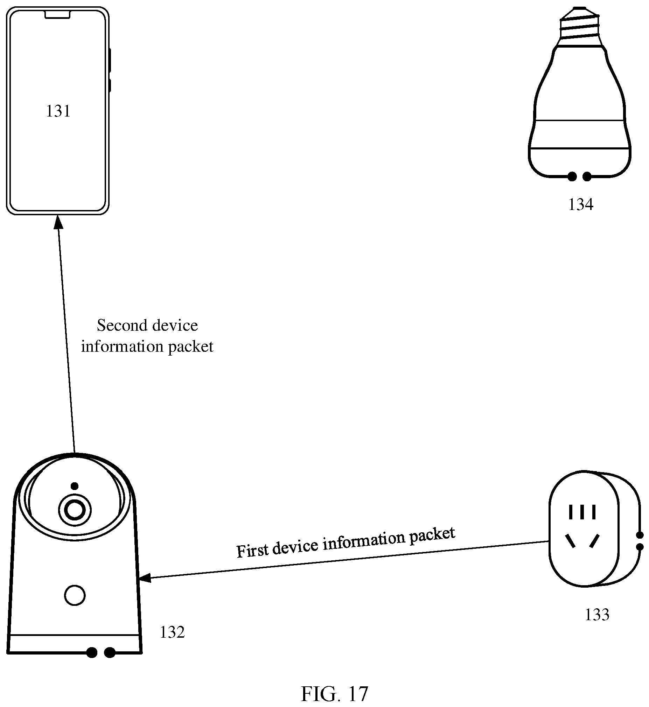

As shown in FIG. 17, after the smart socket 133 performs the device discovery operation, the smart socket 133 may send the first device information packet (namely, the foregoing response packet) to the camera 132. The first device information packet carries device information of an electronic device (namely, the device information of the smart lamp 134) discovered by the smart socket 133.

Step 1412: The camera 132 sends a second device information packet to the mobile phone 131.

After obtaining the first device information packet, the camera 132 may obtain, from the first device information packet, the device information of the electronic device discovered by the smart socket 133.

Then, the camera 132 may send the second device information packet to the mobile phone 131. The second device information packet carries device information of an electronic device (namely, the device information of the smart socket 133) discovered by the camera 132 and the device information of the electronic device (namely, the device information of the smart lamp 134) discovered by the smart socket 133.

Step 1413: The mobile phone 131 displays the device information.

After the mobile phone 131 obtains the second device information packet, the mobile phone 131 may obtain the device information of the smart socket 133 and the device information of the smart lamp 134 from the second device information packet.

Then, the mobile phone 131 may display, to the user, the device information of the camera 132, the device information of the smart socket 133, and the device information of the smart lamp 134. In this way, the user selects a target device from the camera 132, the smart socket 133, and the smart lamp 134.

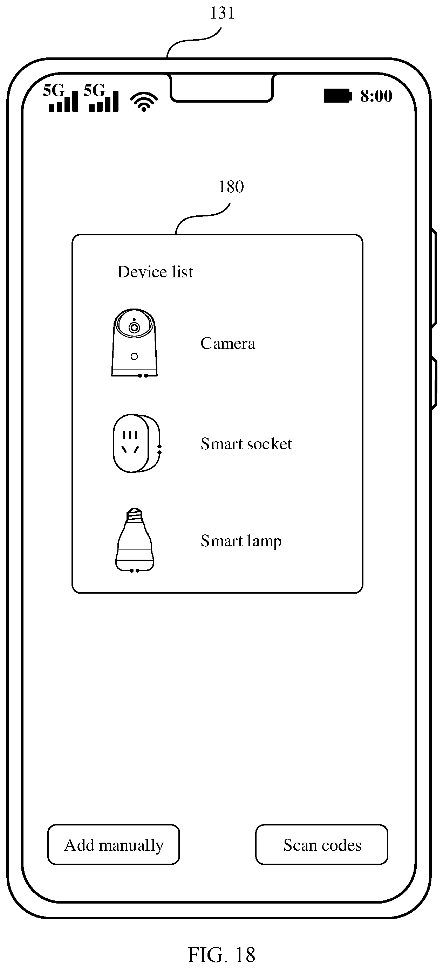

For example, as shown in FIG. 18, after obtaining the second device information packet, the mobile phone 131 may display a device list 180 on a display, and display a "Camera", a "Smart socket", and a "Smart lamp" in the device list 180.

After viewing the device list 180, the user may select, from the device list 180, the target device to which the user wants to connect.

It can be learned from the content of the foregoing embodiment that, in the communication method provided in this embodiment, when the first device detects the device scan operation, the first device can perform a device discovery operation based on a first protocol supported by the first device. The first device can determine the auxiliary device from surrounding electronic devices that support the first protocol. The auxiliary device supports at least one first protocol. The auxiliary device supports a communication protocol other than the at least one first protocol.

Then, the first device can discover, by using a discovery capability of the auxiliary device, some electronic devices (for example, the smart socket 133 in the foregoing embodiment) that do not support the first protocol. In this way, the first device can communicate with the electronic devices that do not support the first protocol.

When performing device discovery, in addition to performing a device discovery operation based on the communication protocol supported by the auxiliary device, the auxiliary device can further develop the next-level auxiliary device, and discover, by using a discovery capability of the next-level auxiliary device, more electronic devices (for example, the smart lamp 134 in the foregoing embodiment) that do not support the first protocol. This further improves user experience.

Similarly, in the foregoing embodiment, auxiliary devices at all levels may continue to develop auxiliary devices at next levels until there is no electronic device around that meets a condition for filtering the auxiliary device. For example, in the foregoing embodiment, the smart socket 133 may also continue to develop a next-level auxiliary device.

In addition, in the communication method described in the foregoing embodiments, the first device determines the auxiliary device based on the protocol information packet returned by the second device.

However, in some other possible implementations, the first device may alternatively obtain, after discovering the first candidate device, a fifth protocol set corresponding to the first candidate device.

The fifth protocol set is a set of communication protocols supported by the first candidate device, or the fifth protocol set is a set of communication protocols currently available for the first candidate device.

Then, if the fifth protocol set is not the subset of the first protocol set, or if the fifth protocol set includes at least one communication protocol that is not in the first protocol set, the first device may determine, as the auxiliary device, the first candidate device corresponding to the fifth protocol set.

If the fifth protocol set is the subset of the first protocol set, or if all communication protocols included in the fifth protocol set are in the first protocol set, the first device may not determine, as the auxiliary device, the first candidate device corresponding to the fifth protocol set.

A manner in which the first device obtains the fifth protocol set corresponding to the first candidate device may be set based on an actual requirement.

Specifically, in some embodiments, after discovering the first candidate device, the first device may query, based on a device type of the first candidate device, the fifth protocol set corresponding to the first candidate device.

In some other embodiments, when sending a packet, each electronic device may include, in the packet, information about a communication protocol supported by the device. When the first device discovers the first candidate device based on a packet sent by the first candidate device, the first device may further parse the packet sent by the first candidate device, to obtain information about the communication protocol supported by the first candidate device, and determine the fifth protocol set corresponding to the first candidate device.

For example, in an example, after discovering the first candidate device, the first device determines that the device type of the first candidate device is an X-brand Y-series mobile phone. In this case, the first device may query, in a device list pre-stored in the first device, a communication protocol supported by the X-brand Y-series mobile phone, to determine the fifth protocol set corresponding to the first candidate device. Alternatively, the first device may query, from a server, a communication protocol supported by the X-brand Y-series mobile phone, to determine the fifth protocol set corresponding to the first candidate device.

In another example, a manufacturer of a Bluetooth sound box of a brand may set that, when the Bluetooth sound box of the brand sends a packet, a manufacturer-customized field in the packet carries information about a communication protocol supported by the Bluetooth sound box of the brand.

Subsequently, when performing the device discovery operation, if the first device discovers the packet sent by the Bluetooth sound box of the brand, the first device may parse the packet, to obtain device information of the Bluetooth sound box of the brand, and discover the Bluetooth sound box based on the device information. In addition, the first device may further parse the manufacturer-customized field in the packet, to obtain the communication protocol supported by the Bluetooth sound box, so as to determine a fifth protocol set corresponding to the Bluetooth sound box.

It can be learned from the foregoing example that, when the first device determines the auxiliary device by using the method provided in this implementation, an interaction procedure between the first device and the auxiliary device can be simplified. Therefore, the first device can determine the auxiliary device more conveniently.

In some other possible implementations, the first device may not select an auxiliary device, but broadcast an auxiliary discovery packet. The broadcast auxiliary discovery packet is used to trigger the second device to perform a device discovery operation.

When the second device receives the auxiliary discovery packet, in response to the broadcast auxiliary packet, the second device may perform the device discovery operation based on the second protocol in a second protocol set, to discover a second candidate device.

Subsequently, the second device may send a device information packet to the first device. The device information packet carries device information of the second candidate device.

When the first device receives the device information packet, the first device may display device information of a first candidate device and the device information of the second candidate device. In this way, the user learns of an electronic device that exists around.

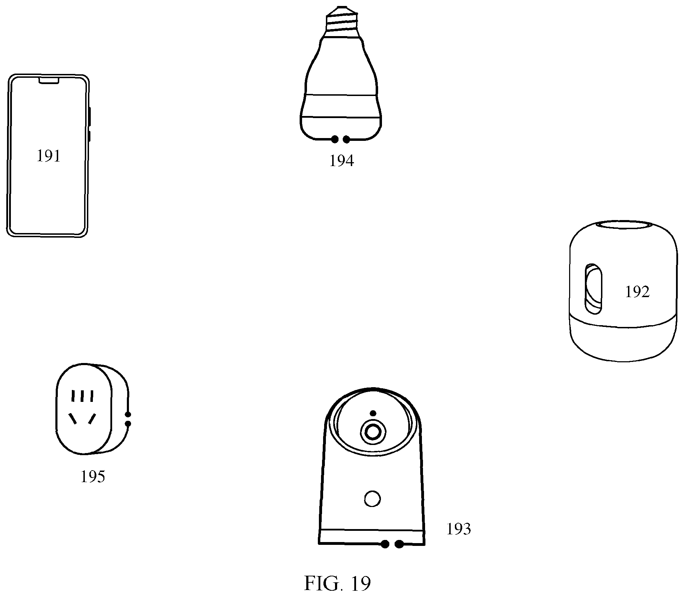

For example, refer to a communication system shown in FIG. 19. The communication system includes a mobile phone 191, a Bluetooth sound box 192, a camera 193, a smart lamp 194, and a smart socket 195.

The mobile phone 191 supports a Bluetooth protocol and a Wi-Fi protocol. The Bluetooth sound box 192 supports the Bluetooth protocol. The camera 193 supports the Wi-Fi protocol and a ZigBee protocol. The smart lamp 194 supports the Bluetooth protocol. The smart socket 195 supports the ZigBee protocol.

The mobile phone 191 is an electronic device that is being used by a user, and may be understood as a first device.

When the mobile phone 191 detects a device scan operation of the user, the mobile phone 191 may perform device discovery operations based on the Bluetooth protocol and the Wi-Fi protocol that are supported by the mobile phone 191, to discover the Bluetooth sound box 192 and the smart lamp 194 that support the Bluetooth protocol, and discover the camera 193 that supports the Wi-Fi protocol.

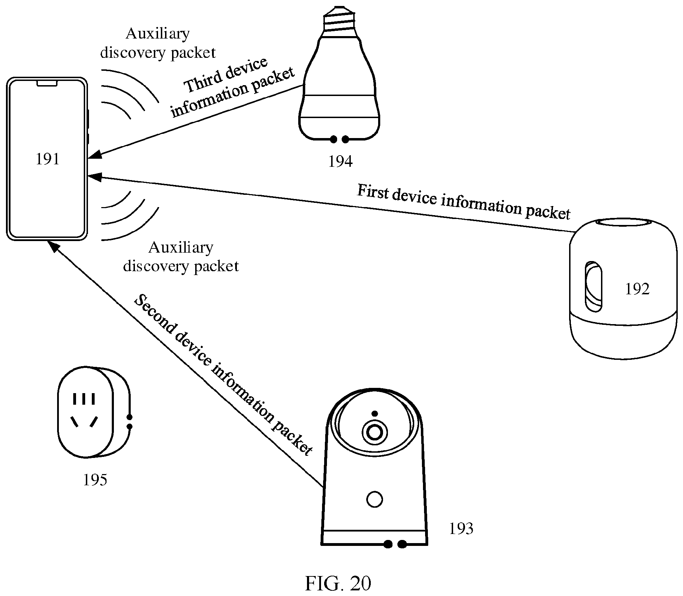

In addition, as shown in FIG. 20, the mobile phone 191 may further broadcast auxiliary discovery packets based on the Bluetooth protocol and the Wi-Fi protocol that are supported by the mobile phone 191.

The Bluetooth sound box 192 and the smart lamp 194 support the Bluetooth protocol, and the camera 193 supports the Wi-Fi protocol. Therefore, the Bluetooth sound box 192 and the smart lamp 194 may receive a Bluetooth protocol-based auxiliary discovery packet, and the camera 193 may receive a Wi-Fi protocol-based auxiliary discovery packet. The smart socket 195 cannot receive the auxiliary discovery packet.

Then, in response to the auxiliary discovery packet, the Bluetooth sound box 192 may perform a device discovery operation based on the Bluetooth protocol supported by the Bluetooth sound box 192, to discover the mobile phone 191 and the smart lamp 194 that support the Bluetooth protocol.

The mobile phone 191 is the first device, and the smart lamp 194 is not the first device. Therefore, the Bluetooth sound box 192 may determine the smart lamp 194 as a second candidate device, and send a first device information packet to the mobile phone 191. The first device information packet carries device information of the smart lamp 194.

In response to the auxiliary discovery packet, the camera 193 may perform a device discovery operation based on the Wi-Fi protocol and the ZigBee protocol that are supported by the camera 193, to discover the mobile phone 191 that supports the Wi-Fi protocol and the smart socket 195 that supports the ZigBee protocol.

The mobile phone 191 is the first device, and the smart socket 195 is not the first device. Therefore, the camera 193 may determine the smart socket 195 as a second candidate device, and send a second device information packet to the mobile phone 191. The second device information packet carries device information of the smart socket 195.

In response to the auxiliary discovery packet, the smart lamp 194 may perform a device discovery operation based on the Bluetooth protocol supported by the smart lamp 194, to discover the mobile phone 191 and the Bluetooth sound box 192 that support the Bluetooth protocol.

The mobile phone 191 is the first device, and the Bluetooth sound box 192 is not the first device. Therefore, the smart lamp 194 may determine the Bluetooth sound box 192 as a second candidate device, and send a third device information packet to the mobile phone 191. The third device information packet carries device information of the Bluetooth sound box 192.

In this case, the Bluetooth sound box 192, the camera 193, and the smart lamp 194 may be understood as the foregoing second devices.

After the mobile phone 191 receives the first device information packet, the second device information packet, and the third device information packet, the mobile phone 191 may obtain the device information of the Bluetooth sound box 192, the device information of the smart lamp 194, and the device information of the smart socket 195 from the first device information packet, the second device information packet, and the third device information packet.

Subsequently, the mobile phone 191 may display, to the user, device information of a first candidate device discovered by the mobile phone 191 and device information of a second candidate device discovered by each second device, including the device information of the Bluetooth sound box 192, device information of the camera 193, the device information of the smart lamp 194, and the device information of the smart socket 195.

It can be learned from the foregoing example that, when the first device performs device discovery by using the method provided in this implementation, the first device can directly broadcast the auxiliary discovery packet, to trigger a surrounding second device to perform a device discovery operation. This omits a process in which the first device determines an auxiliary device, and can effectively improve discovery efficiency of the first device.

In some other possible implementations, the first device may broadcast an auxiliary discovery packet, and in the broadcast auxiliary packet, include information about a communication protocol supported by the first device, or include information about a communication protocol currently available for the first device.

When the second device receives the auxiliary discovery packet, the second device may compare a second protocol set with a first protocol set corresponding to the first device.

The first protocol set is a set of communication protocols supported by the first device, or the first protocol set is a set of communication protocols currently available for the first device.

The second protocol set is a set of communication protocols supported by the second device, or the second protocol set is a set of communication protocols currently available for the second device.

When the second device detects that the second protocol set is not a subset of the first protocol set, it indicates that the second device may assist the first device in discovering an electronic device that does not support a first protocol. Therefore, in response to the auxiliary discovery packet, the second device may perform a device discovery operation based on a second protocol in the second protocol set, to discover a second candidate device.

Subsequently, the second device may send a device information packet to the first device. The device information packet carries device information of the second candidate device.

When the first device receives the device information packet, the first device may display device information of a first candidate device and the device information of the second candidate device. In this way, the user learns of an electronic device that exists around.

For example, refer to the communication system shown in FIG. 19 in the foregoing example. The communication system includes the mobile phone 191, the Bluetooth sound box 192, the camera 193, the smart lamp 194, and the smart socket 195.

The mobile phone 191 supports a Bluetooth protocol and a Wi-Fi protocol. The Bluetooth sound box 192 supports the Bluetooth protocol. The camera 193 supports the Wi-Fi protocol and a ZigBee protocol. The smart lamp 194 supports the Bluetooth protocol. The smart socket 195 supports the ZigBee protocol.

The mobile phone 191 is an electronic device that is being used by a user, and may be understood as a first device.

When the mobile phone 191 detects a device scan operation of the user, the mobile phone 191 may perform device discovery operations based on the Bluetooth protocol and the Wi-Fi protocol that are supported by the mobile phone 191, to discover the Bluetooth sound box 192 and the smart lamp 194 that support the Bluetooth protocol, and discover the camera 193 that supports the Wi-Fi protocol.

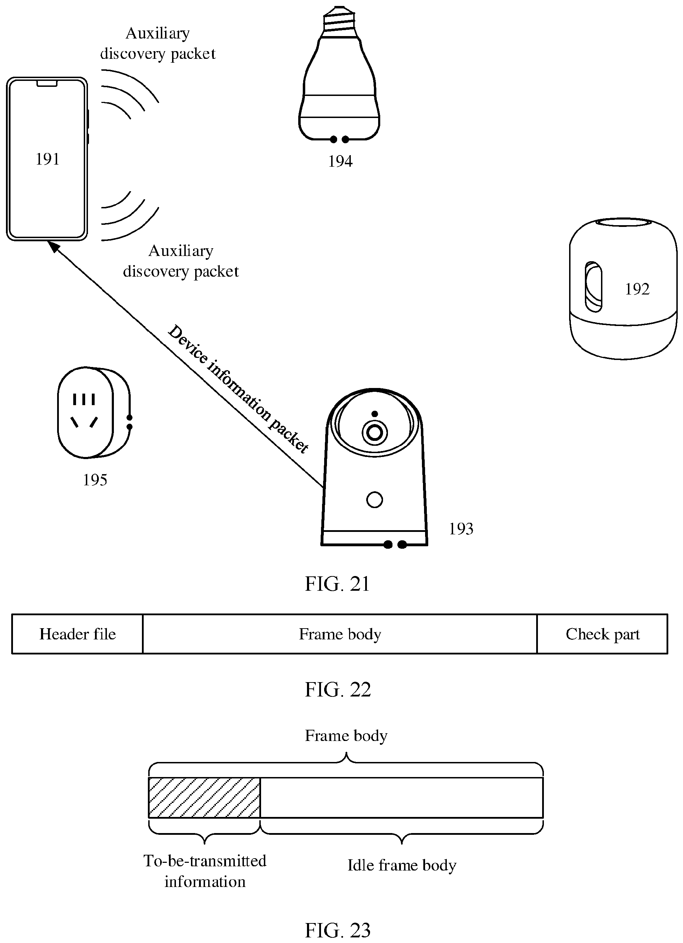

In addition, as shown in FIG. 21, the mobile phone 191 may further broadcast auxiliary discovery packets based on the Bluetooth protocol and the Wi-Fi protocol that are supported by the mobile phone 191. The auxiliary discovery packet carries information indicating that the mobile phone 191 supports the Bluetooth protocol and the Wi-Fi protocol.

The Bluetooth sound box 192 and the smart lamp 194 support the Bluetooth protocol, and the camera 193 supports the Wi-Fi protocol. Therefore, the Bluetooth sound box 192 and the smart lamp 194 may receive a Bluetooth protocol-based auxiliary discovery packet, and the camera 193 may receive a Wi-Fi protocol-based auxiliary discovery packet. The smart socket 195 cannot receive the auxiliary discovery packet.

Then, the Bluetooth sound box 192 detects that the Bluetooth sound box 192 supports only the Bluetooth protocol and does not support another communication protocol. Therefore, the Bluetooth sound box 192 may not respond to the auxiliary discovery packet.

The camera 193 detects that the ZigBee protocol supported by the camera 193 does not belong to a communication protocol supported by the mobile phone 191. Therefore, in response to the auxiliary discovery packet, the camera 193 may perform a device discovery operation based on the Wi-Fi protocol and the ZigBee protocol that are supported by the camera 193, to discover the mobile phone 191 that supports the Wi-Fi protocol and the smart socket 195 that supports the ZigBee protocol.

The mobile phone 191 is the first device, and the smart socket 195 is not the first device. Therefore, the camera 193 may determine the smart socket 195 as a second candidate device, and send a device information packet to the mobile phone 191. The device information packet carries device information of the smart socket 195.

The smart lamp 194 detects that the smart lamp 194 supports only the Bluetooth protocol, and does not support another communication protocol. Therefore, the smart lamp 194 may not respond to the auxiliary discovery packet.

After the mobile phone 191 receives the device information packet sent by the camera 193, the mobile phone 191 may obtain the device information of the smart socket 195 from the device information packet.

Subsequently, the mobile phone 191 may display, to the user, device information of a first candidate device discovered by the mobile phone 191 and device information of the second candidate device discovered by the camera 193, including device information of the Bluetooth sound box 192, device information of the camera 193, device information of the smart lamp 194, and the device information of the smart socket 195.

It can be learned from the foregoing example that, when the first device performs device discovery by using the method provided in this implementation, the first device can broadcast the auxiliary discovery packet, and include, in the auxiliary discovery packet, the information about the communication protocol supported by the first device.

In this case, the second device that receives the auxiliary discovery packet may compare the second protocol set supported by the second device with the first protocol set supported by the first device.

When the second protocol set supported by the second device includes at least one communication protocol that is not in the first protocol set, the second device may respond to the auxiliary discovery packet, perform the device discovery operation, and return the device information packet to the first device.

When the second protocol set supported by the second device is the subset of the first protocol set, the second device may not respond to the auxiliary discovery packet, and does not perform the device discovery operation.

According to the foregoing method, a quantity of invalid device information packets received by the first device can be effectively reduced. This helps improve a speed of processing a device information packet by the first device.

In addition, in the foregoing described embodiments, when the first device performs data exchange with the auxiliary device, packets sent by the first device and the auxiliary device may be independent packets, or may be a concatenated packet.

The concatenated packet is obtained by concatenating, into another packet by the first device and/or the auxiliary device, information that needs to be transmitted in a packet.

As shown in FIG. 22, a frame of packet may be usually divided into three parts: a header file, a frame body, and a check part. The frame body is used to carry to-be-transmitted information, and a length of the frame body is usually specified in a communication protocol.

However, as shown in FIG. 23, in some scenarios, a length of the to-be-transmitted information may be less than the length of the frame body. As a result, a part of the frame body is idle.

Therefore, in some embodiments, the first device and/or the auxiliary device may concatenate, into a frame body of a same packet in a manner of concatenating packets, information that needs to be transmitted in a plurality of packets. This makes full use of the idle frame body, and reduces a to-be-wasted communication resource.

A process in which the auxiliary device sends the device information of the second candidate device is used as an example.

In an example, the auxiliary device may send a device information packet to the first device. A frame body of the device information packet carries only the device information of the second candidate device.

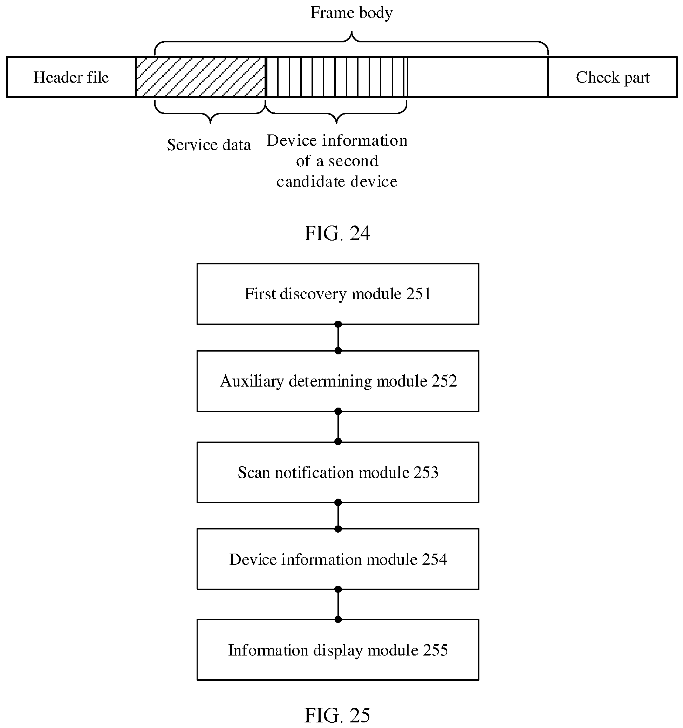

In another example, as shown in FIG. 24, because the auxiliary device also transmits service data, the auxiliary device needs to send a service packet (namely, a packet shown in FIG. 24). A frame body of the service packet carries the service data, but a length of the service data is less than a length of the frame body. As a result, a part of the frame body is idle. Therefore, the auxiliary device may concatenate the device information of the second candidate device into the idle frame body, to obtain a concatenated packet. Then, the auxiliary device may use the concatenated packet as a device information packet, and send the device information packet. After the first device obtains the device information packet through listening, the first device may parse the concatenated packet to obtain the service data and the device information of the second candidate device. This can make full use of the idle frame body, and reduce a to-be-wasted communication resource.

In addition, in some embodiments, the first device and/or the auxiliary device may concatenate, into a packet that is to be sent to a peer end or a packet that is to be sent to another electronic device, information that needs to be transmitted.

A process in which the auxiliary device sends the device information of the second candidate device is used as an example.

In an example, the auxiliary device needs to send a service packet to the first device. A frame body of the service packet carries service data, but a length of the service data is less than a length of the frame body. As a result, a part of the frame body is idle.

In this case, the auxiliary device may concatenate the device information of the second candidate device into the frame body of the service packet, and the auxiliary device may add a concatenation tag to the service packet (for example, add the concatenation tag by setting a specified bit/field of the service packet to a specified value). The concatenation tag indicates that the service packet is a concatenated packet.

Subsequently, when the first device receives the service packet, the first device may determine, based on the concatenation tag, that the service packet is a concatenated packet.

Therefore, after obtaining the service data through parsing, the first device may continue to parse the service packet, to obtain the device information of the second candidate device.

In another example, the auxiliary device needs to send a service packet to another electronic device. A frame body of the service packet carries service data, but a length of the service data is less than a length of the frame body. As a result, a part of the frame body is idle.

In this case, the auxiliary device may concatenate the device information of the second candidate device into the frame body of the service packet, and the auxiliary device may add a concatenation tag to the service packet (for example, add the concatenation tag by setting a specified bit/field of the service packet to a specified value).

The concatenation tag may be a tag pre-agreed on by the first device and the auxiliary device, or the concatenation tag may be a default tag (for example, preset before delivery of the device). The concatenation tag may indicate that the service packet is a concatenated packet, and the concatenation tag may further indicate that the first device/auxiliary device needs to process the packet carrying the concatenation tag.

Subsequently, when the first device receives the service packet, the first device may determine, based on the concatenation tag, that the service packet is a concatenated packet.

A specified receiver of the service packet is not the first device. Therefore, the first device may skip the service data in the service packet, and parse the device information of the second candidate device in the service packet.

According to the foregoing method, the first device and/or the auxiliary device can make full use of the idle frame body, reduce the to-be-wasted communication resource, and improve communication efficiency.

In conclusion, in the communication method provided in embodiments of this application, the first device can discover, by using the discovery capability of the auxiliary device, the electronic device that supports the second protocol. Therefore, the first device can discover some electronic devices that do not support the first protocol, to improve user experience. This achieves high ease-of-use and practicability.

In addition, the auxiliary devices at all the levels may continue to develop the auxiliary devices at the next levels, and perform device discovery by using discovery capabilities of the auxiliary devices at the next levels. In this way, the first device makes full use of a discovery capability of each electronic device in the environment, and discovers more electronic devices that support different communication protocols.

In addition, when the first device performs data exchange with the auxiliary device, the first device/auxiliary device may transmit data in the manner of concatenating the packets. This makes full use of the idle frame body, reduces the to-be-wasted communication resource, and improves communication efficiency.

It should be understood that sequence numbers of the steps do not mean execution sequences in the foregoing embodiments. The execution sequences of the processes should be determined based on functions and internal logic of the processes, and should not constitute any limitation on the implementation processes of embodiments of this application.

Not all the steps described in the foregoing embodiments are necessary steps. A communication method used in an actual application scenario may have more or fewer steps than those in the foregoing embodiments, or some of the steps described above are implemented.

In correspondence to the communication method described in the foregoing embodiments, FIG. 25 is a block diagram of a structure of a communication apparatus according to an embodiment of this application. For ease of description, only a part related to this embodiment of this application is shown. Content in the foregoing embodiments of this application is all applicable to this embodiment of this application. This is not limited in embodiments of this application.

The communication apparatus provided in this embodiment of this application may be applied to the foregoing first device. Refer to FIG. 25. The apparatus includes:
a first discovery module 251, configured to perform a device discovery operation based on a first protocol, to discover a first candidate device that supports the first protocol;
an auxiliary determining module 252, configured to determine the first candidate device as an auxiliary device in response to determining that the first candidate device further supports a second protocol, where the second protocol is different from the first protocol; or
the auxiliary determining module 252 is configured to implement the following steps:
   broadcasting a query packet based on the first protocol; receiving a protocol information packet, where the protocol information packet is a packet fed back by a second device in response to the query packet, and the protocol information packet indicates a communication protocol supported by the second device, or indicates a communication protocol currently available for the second device; and determining the second device as an auxiliary device based on the protocol information packet indicating that the second device supports or is currently capable of using the second protocol;
   a scan notification module 253, configured to send a scan packet to the auxiliary device after the auxiliary device is determined, where the scan packet indicates the auxiliary device to perform a device discovery operation;
   a device information module 254, configured to receive a device information packet sent by the auxiliary device, where the device information packet includes device information of a second candidate device discovered by the auxiliary device by performing the device discovery operation based on the second protocol; and
   an information display module 255, configured to display device information of the first candidate device and the device information of the second candidate device.

Optionally, the auxiliary determining module 252 is specifically configured to implement the following steps:
obtaining working status information corresponding to the second device; and
determining the second device as the auxiliary device based on the protocol information packet indicating that the second device supports or is currently capable of using the second protocol and the working status information corresponding to the second device.

Optionally, the first device receives one or more protocol information packets.

The auxiliary determining module 252 is specifically configured to determine the auxiliary device from one or more second devices based on the one or more protocol information packets. The auxiliary device supports or is currently capable of using the second protocol.

Optionally, the auxiliary determining module 252 is specifically configured to implement the following steps:
determining, based on the one or more protocol information packets, one or more second protocol sets corresponding to the one or more second devices, where the second protocol set is a set of communication protocols supported by or currently available for the second device; and
determining, as the auxiliary device, a second device corresponding to a second protocol set that includes the second protocol and that is not a proper subset of another second protocol set.

Optionally, the first device receives one or more protocol information packets. The protocol information packet is a packet fed back by the second device that supports or is currently capable of using the second protocol.

The auxiliary determining module 252 is specifically configured to determine, as auxiliary devices, all second devices that feed back the protocol information packets.

Optionally, the apparatus further includes:
an operation detection module, configured to detect a device selection operation of a user;
a target determining module, configured to determine a target device in response to the device selection operation, where the target device is the first candidate device or the second candidate device; and
a connection establishment module, configured to: when the target device is the second candidate device, send a first connection request to the auxiliary device that discovers the target device, where the first connection request is used to trigger the first device to establish a connection to the auxiliary device based on the first protocol, and is used to trigger the auxiliary device to establish a connection to the target device based on the second protocol.

Optionally, the apparatus further includes:
a data transmission module, configured to send a data packet to the auxiliary device, where the data packet includes data to be sent to the target device by the first device.

Optionally, the connection establishment module is further configured to: when the target device is the first candidate device, establish a connection to the target device based on the first protocol.

Optionally, the working status information includes one or more of a power connection status, remaining battery level information, central processing unit usage, memory usage, and communication capability information.

Optionally, the device information packet further includes device information of an electronic device discovered by a next-level auxiliary device corresponding to the auxiliary device.

Optionally, the device information includes one or more of a device name, a media access control MAC address, an internet protocol IP address, a device type, and a type of a supported communication protocol.

It should be noted that content such as information exchange and execution processes between the foregoing apparatuses/modules are based on a same concept as those in the method embodiments of this application. For specific functions and brought technical effects of the foregoing apparatuses/modules, refer to the method embodiments. Details are not described herein again.

A person of ordinary skill in the art may be aware that units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In embodiments provided in this application, it should be understood that the disclosed apparatus/electronic device and method may be implemented in other manners. For example, the described apparatus/electronic device embodiment is merely an example. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions in embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When being implemented in the form of the software functional unit and sold or used as an independent product, the integrated module/unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the foregoing method embodiments may be implemented. The computer program includes computer program code, and the computer program code may be in a source code form, an object code form, an executable file, an intermediate form, or the like. The computer-readable storage medium may include any entity or apparatus that can carry the computer program code, a recording medium, a USB flash drive, a removable hard disk, a magnetic disk, a compact disc, a computer memory, a read-only memory (ROM, Read-Only Memory), a random access memory (RAM, Random Access Memory), an electrical carrier signal, a telecommunication signal, a software distribution medium, and the like. It should be noted that content included in the computer-readable storage medium may be appropriately added or deleted based on requirements of legislation and patent practice in a jurisdiction. For example, in some jurisdictions, according to legislation and patent practice, the computer-readable storage medium does not include the electrical carrier signal or the telecommunication signal.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, carried out by a first device, wherein the first device supports a first protocol, and the method comprises:
performing (S501) a device discovery operation based on the first protocol, to discover a first candidate device that supports the first protocol;
determining (S501) the first candidate device as an auxiliary device in response to determining that the first candidate device further supports a second protocol, wherein the second protocol is different from the first protocol; or
broadcasting (S501) a query packet based on the first protocol; receiving (S502) a protocol information packet, wherein the protocol information packet is a packet fed back by a second device in response to the query packet, and the protocol information packet indicates a communication protocol supported by the second device, or indicates a communication protocol currently available for the second device; and determining (S503) the second device as an auxiliary device based on the protocol information packet indicating that the second device supports or is currently capable of using the second protocol;
after determining the auxiliary device, sending (S504) a scan packet to the auxiliary device, wherein the scan packet indicates the auxiliary device to perform a device discovery operation;
receiving (S505) a device information packet sent by the auxiliary device, wherein the device information packet comprises device information of a second candidate device discovered by the auxiliary device by performing the device discovery operation based on the second protocol; and
displaying (S506) device information of the first candidate device and the device information of the second candidate device;
wherein the first device receives one or more protocol information packets; and
the determining the second device as an auxiliary device based on the protocol information packet indicating that the second device supports or is currently capable of using the second protocol specifically comprises:
determining, based on the one or more protocol information packets, one or more second protocol sets corresponding to the one or more second devices, wherein the second protocol set is a set of communication protocols supported by or currently available for the second device; and
determining, as the auxiliary device, a second device corresponding to a second protocol set that comprises the second protocol and that is not a proper subset of another second protocol set;
wherein if there are at least two second devices that support a same target protocol set, the first device sequentially compares, based on priorities of various types of working status information, the second devices that support the same target protocol set, reserves a second device with optimal performance as the auxiliary device and removes a second device with poorer performance;
wherein the working status information comprises one or more of a power connection status, remaining battery level information, central processing unit usage, memory usage, and communication capability information.

2. The method according to claim 1, wherein the method further comprises:
detecting a device selection operation of a user;
determining a target device in response to the device selection operation, wherein the target device is the first candidate device or the second candidate device; and
when the target device is the second candidate device, sending a first connection request to the auxiliary device that discovers the target device, wherein the first connection request is used to trigger the first device to establish a connection to the auxiliary device based on the first protocol, and is used to trigger the auxiliary device to establish a connection to the target device based on the second protocol.

3. The method according to claim 2, wherein after the sending a first connection request to the auxiliary device that discovers the target device, the method further comprises:
sending a data packet to the auxiliary device, wherein the data packet comprises data to be sent to the target device by the first device.

4. The method according to claim 2, wherein after the determining a target device, the method further comprises:
when the target device is the first candidate device, establishing a connection to the target device based on the first protocol.

5. The method according to any one of claims 1 to 4, wherein the device information packet further comprises device information of an electronic device discovered by a next-level auxiliary device corresponding to the auxiliary device.

6. A communication method, carried out by a second device, wherein the second device supports a first protocol and a second protocol, and the method comprises:
receiving a query packet that is broadcast by a first device based on the first protocol;
sending a protocol information packet to the first device in response to the query packet, wherein the protocol information packet indicates a communication protocol supported by the second device, or indicates a communication protocol currently available for the second device;
after receiving a scan packet sent by the first device, performing a device discovery operation based on the second protocol, to discover a second candidate device that supports the second protocol, wherein the second protocol is different from the first protocol; and
sending a device information packet to the first device, wherein the device information packet comprises device information of the second candidate device;
wherein when sending the protocol information packet, the second device includes the working status information of the second device in the protocol information packet;
wherein the working status information comprises one or more of a power connection status, remaining battery level information, central processing unit usage, memory usage, and communication capability information.

7. The method according to claim 6, wherein the sending a protocol information packet to the first device in response to the query packet specifically comprises:
obtaining, in response to the query packet, information about the communication protocol supported by the second device; and
sending the protocol information packet to the first device after determining that the communication protocol supported by the second device comprises the second protocol.

8. The method according to claim 6 or 7, wherein the device information packet further comprises device information of an electronic device discovered by a next-level auxiliary device corresponding to the second device; and
before the sending a device information packet to the first device, the method further comprises:
determining the next-level auxiliary device corresponding to the second device;
sending an auxiliary scan packet to the next-level auxiliary device, wherein the auxiliary scan packet is used to trigger the next-level auxiliary device to perform a device discovery operation; and
receiving a response packet sent by the next-level auxiliary device, wherein the response packet comprises the device information of the electronic device discovered by the next-level auxiliary device by performing the device discovery operation.

9. A computer-readable storage medium, comprising instructions which, when executed by a computer, cause the computer to carry out the method of any one of claims 1 to 8.

10. A chip system, comprising a memory and a processor, the memory storing instructions and the processor being configured to execute the instructions to cause a device to carry out the method of any one of claims 1 to 8.

## Patentansprüche

1. Kommunikationsverfahren, das von einer ersten Vorrichtung ausgeführt wird, wobei die erste Vorrichtung ein erstes Protokoll unterstützt und das Verfahren Folgendes umfasst:
Durchführen (S501) einer Vorrichtungserkennungsoperation auf der Basis des ersten Protokolls, um eine erste Kandidatenvorrichtung zu erkennen, die das erste Protokoll unterstützt;
Bestimmen (S501) der ersten Kandidatenvorrichtung als eine Hilfsvorrichtung als Reaktion auf das Bestimmen, dass die erste Kandidatenvorrichtung ferner ein zweites Protokoll unterstützt, wobei sich das zweite Protokoll von dem ersten Protokoll unterscheidet; oder
Senden (S501) eines Abfragepakets auf der Basis des ersten Protokolls; Empfangen (S502) eines Protokollinformationspakets, wobei das Protokollinformationspaket ein Paket ist, das von einer zweiten Vorrichtung als Reaktion auf das Abfragepaket zurückgesendet wird, und das Protokollinformationspaket ein Kommunikationsprotokoll anzeigt, das von der zweiten Vorrichtung unterstützt wird, oder ein derzeit für die zweite Vorrichtung verfügbares Kommunikationsprotokoll anzeigt; und Bestimmen (S503) der zweiten Vorrichtung als eine Hilfsvorrichtung auf der Basis des Protokollinformationspakets, das anzeigt, dass die zweite Vorrichtung das zweite Protokoll unterstützt oder derzeit in der Lage ist, es zu verwenden;
nach dem Bestimmen der Hilfsvorrichtung, Senden (S504) eines Abtastpakets an die Hilfsvorrichtung, wobei das Abtastpaket angibt, dass die Hilfsvorrichtung eine Vorrichtungserkennungsoperation durchführt;
Empfangen (S505) eines von der Hilfsvorrichtung gesendeten Vorrichtungsinformationspakets, wobei das Vorrichtungsinformationspaket Vorrichtungsinformationen einer zweiten Kandidatenvorrichtung umfasst, die von der Hilfsvorrichtung durch Durchführen der auf dem zweiten Protokoll basierenden Vorrichtungserkennungsoperation erkannt wurde; und
Anzeigen (S506) von Vorrichtungsinformationen der ersten Kandidatenvorrichtung und der Vorrichtungsinformationen der zweiten Kandidatenvorrichtung;
wobei die erste Vorrichtung ein oder mehrere Protokollinformationspakete empfängt; und
das Bestimmen der zweiten Vorrichtung als Hilfsvorrichtung auf der Basis des Protokollinformationspakets, das angibt, dass die zweite Vorrichtung das zweite Protokoll unterstützt oder derzeit in der Lage ist, es zu verwenden, Folgendes umfasst:
Bestimmen, basierend auf dem einen oder den mehreren Protokollinformationspaketen, eines oder mehrerer zweiter Protokollsätze, die der einen oder den mehreren zweiten Vorrichtungen entsprechen, wobei der zweite Protokollsatz ein Satz von Kommunikationsprotokollen ist, die von der zweiten Vorrichtung unterstützt werden oder derzeit für diese verfügbar sind; und
Bestimmen, als die Hilfsvorrichtung, einer zweiten Vorrichtung, die einem zweiten Protokollsatz entspricht, der das zweite Protokoll umfasst und der kein richtiger Teilsatz eines anderen zweiten Protokollsatzes ist;
wobei, falls es mindestens zwei zweite Vorrichtungen gibt, die denselben Zielprotokollsatz unterstützen, die erste Vorrichtung auf der Basis von Prioritäten verschiedener Arten von Arbeitsstatusinformationen sequentiell die zweiten Vorrichtungen vergleicht, die denselben Zielprotokollsatz unterstützen, eine zweite Vorrichtung mit optimaler Leistung als Hilfsvorrichtung reserviert und eine zweite Vorrichtung mit schlechterer Leistung entfernt;
wobei die Arbeitsstatusinformationen Folgendes umfassen: einen Stromverbindungsstatus, Informationen über den verbleibenden Batteriestand, Informationen über die Nutzung der zentralen Verarbeitungseinheit, Informationen über die Speichernutzung und Informationen über die Kommunikationsfähigkeit.

2. Verfahren nach Anspruch 1, wobei das Verfahren ferner Folgendes umfasst:
Erkennen einer Vorrichtungsauswahloperation eines Benutzers;
Bestimmen einer Zielvorrichtung als Reaktion auf die Vorrichtungsauswahloperation, wobei die Zielvorrichtung die erste Kandidatenvorrichtung oder die zweite Kandidatenvorrichtung ist; und
wenn die Zielvorrichtung die zweite Kandidatenvorrichtung ist, Senden einer ersten Verbindungsanfrage an die Hilfsvorrichtung, die die Zielvorrichtung erkennt, wobei die erste Verbindungsanfrage verwendet wird, um die erste Vorrichtung dazu zu veranlassen, eine Verbindung mit der Hilfsvorrichtung auf der Basis des ersten Protokolls herzustellen, und verwendet wird, um die Hilfsvorrichtung dazu zu veranlassen, eine Verbindung mit der Zielvorrichtung auf der Basis des zweiten Protokolls herzustellen.

3. Verfahren nach Anspruch 2, wobei das Verfahren nach dem Senden einer ersten Verbindungsanfrage an die Hilfsvorrichtung, die das Zielgerät erkennt, ferner Folgendes umfasst:
Senden eines Datenpakets an die Hilfsvorrichtung, wobei das Datenpaket Daten umfasst, die von der ersten Vorrichtung an die Zielvorrichtung zu senden sind.

4. Verfahren nach Anspruch 2, wobei das Verfahren nach dem Bestimmen einer Zielvorrichtung ferner Folgendes umfasst:
wenn die Zielvorrichtung die erste Kandidatenvorrichtung ist, Herstellen einer Verbindung zur Zielvorrichtung basierend auf dem ersten Protokoll.

5. Verfahren gemäß einem der Ansprüche 1 bis 4, wobei das Vorrichtungsinformationspaket ferner Vorrichtungsinformationen über eine elektronische Vorrichtung umfasst, die von einer Hilfsvorrichtung der nächsten Ebene erkannt wurde, die der Hilfsvorrichtung entspricht.

6. Kommunikationsverfahren, ausgeführt von einer zweiten Vorrichtung, wobei die zweite Vorrichtung ein erstes Protokoll und ein zweites Protokoll unterstützt, und das Verfahren Folgendes umfasst:
Empfangen eines Abfragepakets, das von einer ersten Vorrichtung basierend auf dem ersten Protokoll gesendet wird;
Senden eines Protokollinformationspakets an die erste Vorrichtung als Reaktion auf das Abfragepaket, wobei das Protokollinformationspaket ein Kommunikationsprotokoll anzeigt, das von der zweiten Vorrichtung unterstützt wird, oder ein Kommunikationsprotokoll anzeigt, das derzeit für die zweite Vorrichtung verfügbar ist;
nach Empfangen eines von der ersten Vorrichtung gesendeten Abtastpakets, Durchführen einer auf dem zweiten Protokoll basierenden Vorrichtungserkennungsoperation, um eine zweite Kandidatenvorrichtung zu erkennen, die das zweite Protokoll unterstützt, wobei sich das zweite Protokoll von dem ersten Protokoll unterscheidet; und
Senden eines Vorrichtungsinformationspakets an die erste Vorrichtung, wobei das Vorrichtungsinformationspaket Vorrichtungsinformationen der zweiten Kandidatenvorrichtung umfasst;
wobei die zweite Vorrichtung beim Senden des Protokollinformationspakets die Arbeitsstatusinformationen der zweiten Vorrichtung in dem Protokollinformationspaket enthält;
wobei die Arbeitsstatusinformationen Folgendes umfassen: einen Stromverbindungsstatus, Informationen über den verbleibenden Batteriestand, Informationen über die Nutzung der zentralen Verarbeitungseinheit, Informationen über die Speichernutzung und Informationen über die Kommunikationsfähigkeit.

7. Verfahren nach Anspruch 6, wobei das Senden eines Protokollinformationspakets an die erste Vorrichtung als Reaktion auf das Abfragepaket insbesondere Folgendes umfasst:
Erhalten, als Reaktion auf das Abfragepaket, von Informationen über das von der zweiten Vorrichtung unterstützte Kommunikationsprotokoll; und
Senden des Protokollinformationspakets an die erste Vorrichtung, nachdem bestimmt wurde, dass das von der zweiten Vorrichtung unterstützte Kommunikationsprotokoll das zweite Protokoll umfasst.

8. Verfahren nach Anspruch 6 oder 7, wobei das Vorrichtungsinformationspaket ferner Vorrichtungsinformationen über eine elektronische Vorrichtung umfasst, die von einer der zweiten Vorrichtung entsprechenden Hilfsvorrichtung der nächsten Ebene erkannt wurde; und
wobei das Verfahren vor dem Senden eines Vorrichtungsinformationspakets an die erste Vorrichtung ferner Folgendes umfasst:
Bestimmen der Hilfsvorrichtung der nächsten Ebene, die der zweiten Vorrichtung entspricht;
Senden eines Hilfsabtastpakets an die Hilfsvorrichtung der nächsten Ebene, wobei das Hilfsabtastpaket verwendet wird, um die Hilfsvorrichtung der nächsten Ebene zu veranlassen, eine Vorrichtungserkennungsoperation durchzuführen; und
Empfangen eines Antwortpakets, das von der Hilfsvorrichtung der nächsten Ebene gesendet wird, wobei das Antwortpaket die Vorrichtungsinformationen über die elektronische Vorrichtung umfasst, die von der Hilfsvorrichtung der nächsten Ebene durch Durchführen der Vorrichtungserkennungsoperation erkannt wurde.

9. Computerlesbares Speichermedium, das Anweisungen enthält, die, wenn sie durch einen Computer ausgeführt werden, den Computer veranlassen, das Verfahren nach einem der Ansprüche 1 bis 8 auszuführen.

10. Chip-System, das einen Speicher und einen Prozessor enthält, wobei der Speicher Anweisungen speichert und der Prozessor ausgebildet ist, die Anweisungen auszuführen, um eine Vorrichtung zu veranlassen, das Verfahren nach einem der Ansprüche 1 bis 8 auszuführen.

## Revendications

1. Procédé de communication, mis en œuvre par un premier dispositif, le premier dispositif prenant en charge un premier protocole, et le procédé comprenant :
la réalisation (S501) d'une opération de découverte de dispositif sur la base du premier protocole, pour découvrir un premier dispositif candidat qui prend en charge le premier protocole ;
la détermination (S501) du premier dispositif candidat en tant que dispositif auxiliaire en réponse à la détermination que le premier dispositif candidat prend en charge en outre un second protocole, le second protocole étant différent du premier protocole ; ou
la diffusion (S501) d'un paquet d'interrogation sur la base du premier protocole ; la réception (S502) d'un paquet d'informations de protocole, le paquet d'informations de protocole étant un paquet renvoyé par un second dispositif en réponse au paquet d'interrogation, et le paquet d'informations de protocole indiquant un protocole de communication pris en charge par le second dispositif, ou indiquant un protocole de communication actuellement disponible pour le second dispositif ; et la détermination (S503) du second dispositif en tant que dispositif auxiliaire sur la base du paquet d'informations de protocole indiquant que le second dispositif prend en charge ou est actuellement capable d'utiliser le second protocole ;
après la détermination du dispositif auxiliaire, **l'envoi** (S504) d'un paquet de balayage au dispositif auxiliaire, le paquet de balayage indiquant au dispositif auxiliaire d'effectuer une opération de découverte de dispositif ;
la réception (S505) d'un paquet d'informations de dispositif envoyé par le dispositif auxiliaire, le paquet d'informations de dispositif comprenant des informations de dispositif d'un second dispositif candidat découvert par le dispositif auxiliaire en réalisant l'opération de découverte de dispositif sur la base du second protocole ; et
l'affichage (S506) des informations de dispositif du premier dispositif candidat et des informations de dispositif du second dispositif candidat ;
le premier dispositif recevant un ou plusieurs paquets d'informations de protocole ; et
la détermination du second dispositif en tant que dispositif auxiliaire sur la base du paquet d'informations de protocole indiquant que le second dispositif prend en charge ou est actuellement capable d'utiliser le second protocole comprenant spécifiquement : la détermination, sur la base du ou des paquets d'informations de protocole, d'un ou plusieurs ensembles de seconds protocoles correspondant au ou aux seconds dispositifs, l'ensemble de seconds protocoles étant un ensemble de protocoles de communication pris en charge par ou actuellement disponibles pour le second dispositif ; et
la détermination, en tant que dispositif auxiliaire, d'un second dispositif correspondant à un ensemble de seconds protocoles qui comprend le second protocole et qui n'est pas un sous-ensemble propre d'un autre ensemble de seconds protocoles ;
si au moins deux seconds dispositifs prennent en charge un même ensemble de protocoles cibles, le premier dispositif comparant séquentiellement, sur la base de priorités de divers types d'informations d'état de fonctionnement, les seconds dispositifs qui prennent en charge le même ensemble de protocoles cibles, réservant un second dispositif avec des performances optimales en tant que dispositif auxiliaire et supprimant un second dispositif avec des performances plus faibles ;
les informations d'état de fonctionnement comprenant un ou plusieurs éléments parmi un état de connexion d'alimentation, des informations de niveau de batterie restant, une utilisation d'unité centrale de traitement, une utilisation de mémoire et des informations de capacité de communication.

2. Procédé selon la revendication 1, le procédé comprenant en outre :
la détection d'une opération de sélection de dispositif d'un utilisateur ;
la détermination d'un dispositif cible en réponse à l'opération de sélection de dispositif,
le dispositif cible étant le premier dispositif candidat ou le second dispositif candidat ; et
lorsque le dispositif cible est le second dispositif candidat, l'envoi d'une première demande de connexion au dispositif auxiliaire qui découvre le dispositif cible, la première demande de connexion étant utilisée pour déclencher le premier dispositif pour établir une connexion au dispositif auxiliaire sur la base du premier protocole, et étant utilisée pour déclencher le dispositif auxiliaire pour établir une connexion au dispositif cible sur la base du second protocole.

3. Procédé selon la revendication 2, après l'envoi d'une première demande de connexion au dispositif auxiliaire qui découvre le dispositif cible, le procédé comprenant en outre :
l'envoi d'un paquet de données au dispositif auxiliaire, le paquet de données comprenant des données à envoyer au dispositif cible par le premier dispositif.

4. Procédé selon la revendication 2, après la détermination d'un dispositif cible, le procédé comprenant en outre :
lorsque le dispositif cible est le premier dispositif candidat, l'établissement d'une connexion au dispositif cible sur la base du premier protocole.

5. Procédé selon l'une quelconque des revendications 1 à 4, le paquet d'informations de dispositif comprenant en outre des informations de dispositif d'un dispositif électronique découvert par un dispositif auxiliaire de niveau suivant correspondant au dispositif auxiliaire.

6. Procédé de communication, mis en œuvre par un second dispositif, le second dispositif prenant en charge un premier protocole et un second protocole, et le procédé comprenant :
la réception d'un paquet d'interrogation qui est diffusé par un premier dispositif sur la base du premier protocole ;
l'envoi d'un paquet d'informations de protocole au premier dispositif en réponse au paquet d'interrogation, le paquet d'informations de protocole indiquant un protocole de communication pris en charge par le second dispositif, ou indiquant un protocole de communication actuellement disponible pour le second dispositif ;
après la réception d'un paquet de balayage envoyé par le premier dispositif, la réalisation d'une opération de découverte de dispositif sur la base du second protocole, pour découvrir un second dispositif candidat qui prend en charge le second protocole, le second protocole étant différent du premier protocole ; et
l'envoi d'un paquet d'informations de dispositif au premier dispositif, le paquet d'informations de dispositif comprenant des informations de dispositif du second dispositif candidat ;
lors de l'envoi du paquet d'informations de protocole, le second dispositif incluant les informations d'état de fonctionnement du second dispositif dans le paquet d'informations de protocole ;
les informations d'état de fonctionnement comprenant un ou plusieurs éléments parmi un état de connexion d'alimentation, des informations de niveau de batterie restant, une utilisation d'unité centrale de traitement, une utilisation de mémoire et des informations de capacité de communication.

7. Procédé selon la revendication 6, l'envoi d'un paquet d'informations de protocole au premier dispositif en réponse au paquet d'interrogation comprenant spécifiquement :
l'obtention, en réponse au paquet d'interrogation, d'informations concernant le protocole de communication pris en charge par le second dispositif ; et
l'envoi du paquet d'informations de protocole au premier dispositif après la détermination que le protocole de communication pris en charge par le second dispositif comprend le second protocole,

8. Procédé selon la revendication 6 ou 7, le paquet d'informations de dispositif comprenant en outre des informations de dispositif d'un dispositif électronique découvert par un dispositif auxiliaire de niveau suivant correspondant au second dispositif ; et
avant l'envoi d'un paquet d'informations de dispositif au premier dispositif, le procédé comprenant en outre :
la détermination du dispositif auxiliaire de niveau suivant correspondant au second dispositif ;
l'envoi d'un paquet de balayage auxiliaire au dispositif auxiliaire de niveau suivant, le paquet de balayage auxiliaire étant utilisé pour déclencher le dispositif auxiliaire de niveau suivant pour effectuer une opération de découverte de dispositif ; et
la réception d'un paquet de réponse envoyé par le dispositif auxiliaire de niveau suivant, le paquet de réponse comprenant les informations de dispositif du dispositif électronique découvert par le dispositif auxiliaire de niveau suivant en réalisant l'opération de découverte de dispositif.

9. Support de stockage lisible par ordinateur, comprenant des instructions qui, lorsqu'elles sont exécutées par un ordinateur, amènent l'ordinateur à mettre en œuvre le procédé selon l'une quelconque des revendications 1 à 8.

10. Système de puce, comprenant une mémoire et un processeur, la mémoire stockant des instructions et le processeur étant configuré pour exécuter les instructions pour amener un dispositif à mettre en œuvre le procédé selon l'une quelconque des revendications 1 à 8.
